(19) Europäisches Patentamt
European Patent Office
Office européen des brevets

(11) Veröffentlichungsnummer : **0 332 005 B1**

(12) # EUROPÄISCHE PATENTSCHRIFT

(45) Veröffentlichungstag der Patentschrift : **09.09.92 Patentblatt 92/37**

(51) Int. Cl.$^5$ : **C09K 19/42,** G02F 1/137, C09K 19/18, C09K 19/30

(21) Anmeldenummer : **89103412.6**

(22) Anmeldetag : **27.02.89**

(54) **Supertwist-Flüssigkristallanzeige.**

Verbunden mit 89902769.2/0360851 (europäische Anmeldenummer/Veröffentlichungsnummer) durch Entscheidung vom 14.11.91.

(30) Priorität : **10.03.88 DE 3807805**
**20.10.88 DE 3835803**

(43) Veröffentlichungstag der Anmeldung : **13.09.89 Patentblatt 89/37**

(45) Bekanntmachung des Hinweises auf die Patenterteilung : **09.09.92 Patentblatt 92/37**

(84) Benannte Vertragsstaaten : **AT BE CH DE ES FR GB GR IT LI LU NL SE**

(56) Entgegenhaltungen :
**EP-A- 0 125 563**
**EP-A- 0 131 216**
**EP-A- 0 260 450**
**WO-A-88/07514**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **Weber, Georg**
**Wilhelm-Leuschner-Strasse 38**
**W-6106 Erzhausen (DE)**
Erfinder : **Plach, Herbert, Dr.**
**Wingertsberg 5**
**W-6100 Darmstadt (DE)**
Erfinder : **Reiffenrath, Volker**
**Jahnstrasse 18**
**W-6101 Rossdorf (DE)**
Erfinder : **Hittich, Reinhard, Dr.**
**Am Kirchberg 11**
**W-6101 Modautal 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft eine Supertwist-Flüssigkristallanzeige mit

– zwei planparallelen Trägerplatten, die mit einer Umrandung eine Zelle bilden,

– einer in der Zelle befindlichen nematischen Flüssigkristallmischung mit positiver dielektrischer Anisotropie und mit mindestens einem chiralen Dotierstoff,

– Elektrodenschichten mit darüberliegenden Orientierungsschichten auf den Innenseiten der Trägerplatten,

– einem Anstellwinkel zwischen der Längsachse der Moleküle an der Oberfläche der Trägerplatten und den Trägerplatten von etwa 1° bis 30°, und

– einem Verdrillungswinkel der Flüssigkristallmischung in der Zelle von Orientierungsschicht zu Orientierungsschicht dem Betrag nach zwischen 160° und 450°, dadurch gekennzeichnet, daß die nematische Flüssigkristallmischung folgenden mindestens eine 1,4-disubstituierte 2,3-Difluorbenzolverbindung enthält und fologenden Bedingungen genügt:

– nematischer Phasenbereich von mindestens 60 °C,

– Viskosität von 30 mPa.s oder darunter, und

– $\Delta\varepsilon/\varepsilon_\perp < 2.0$, wobei $\Delta\varepsilon$ die dielektrische Anisotropie und $\varepsilon_\perp$ die Dielektrizitätskonstante in Richtung der kurzen Achse der Flüssigkristallmoleküle bedeutet.

Supertwist-Flussigkristallanzeigen (SFK-Anzeigen) gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFK-Anzeige umfaßt hier jede höher verdrillte Anzeige mit einem Verdrillungswinkel dem Betrage nach zwischen 160° und 360°, wie beispielsweise die Anzeigen nach Waters et al. (C.M. Waters et al., Proc. Soc. Inf. Disp. (New York) (1985) (3rd Intern. Display Conference, Kobe, Japan), die STN-LCD'S (DE OS 35 03 259), SBE-LCD'S (T.J. Scheffer und J. Nehring, Appl. Phys. Lett. 45 (1984) 1021), OMI-LCD'S (M. Schadt und F. Leenhouts, Appl. Phys. Lett. 50 (1987), 236, DST-LCD'S (EP OS 0 246 842) oder BW-STN-LCD'S (K. Kawasaki et al., SID 87 Digest 391 (20.6)).

Derartige Anzeigen zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind Supertwist-Anzeigen mit sehr hoher Kennliniensteilheit. Als Maß für die Kennliniensteilheit wird im allgemeinen das Verhältnis $V_{50}/V_{10}$ gewählt ($V_{50}$ = Spannung bei 50 % Kontrast/$V_{10}$ = Spannung bei 10 % Kontrast). Zur Erzielung von hohen Kennliniensteilheiten wurden bisher insbesondere die elastischen Eigenschaften der Flüssigkristallmischung optimiert. Die erzielten Steilheiten waren jedoch nicht für jede Anwendung ausreichend.

Es besteht somit immer noch ein großer Bedarf nach SFK-Anzeigen mit sehr hohen Kennliniensteilheiten bei gleichzeitig großem Arbeitstemperaturbereich, kurzen Schaltzeiten und niedriger Schwellenspannung.

Der Erfindung liegt die Aufgabe zugrunde, SFK-Anzeigen bereitzustellen, die die oben angegebenen Nachteile nicht oder nur in geringerem Maße und gleichzeitig sehr hohe Kennliniensteilheiten aufweisen.

Es wurde nun gefunden, daß diese Aufgabe gelöst werden kann, wenn man in diesen Anzeigen nematische Flüssigkristallmischungen enthaltend mindestens eine 1,4-disubstituierte 2,3-Difluorbenzolverbindung, und verwendet, die folgenden Bedingungen genügen:

– nematischer Phasenbereich von mindestens 60 °C,

– Viskosität von 30 mPa.s oder darunter, und

– $\Delta\varepsilon/\varepsilon_\perp < 2.0$, wobei $\Delta\varepsilon$ die dielektrische Anisotropie und $\varepsilon_\perp$ die Dielektrizitätskonstante in Richtung der kurzen Achse der Flüssigkristallmoleküle bedeutet.

Gegenstand der Erfindung ist somit eine Supertwist-Flüssigkristallanzeige mit

– zwei planparallelen Trägerplatten, die mit einer Umrandung eine Zelle bilden,

– einer in der Zelle befindlichen nematischen Flüssigkristallmischung mit positiver dielektrischer Anisotropie und mit mindestens einem chiralen Dotierstoff,

– Elektrodenschichten mit darüberliegenden Orientierungsschichten auf den Innenseiten der Trägerplatten,

– einem Anstellwinkel zwischen der Längsachse der Moleküle an der Oberfläche der Trägerplatten und den Trägerplatten von etwa 1° bis 30°, und

– einem Verdrillungswinkel der Flüssigkristallmischung in der Zelle von Orientierungsschicht zu Orientierungsschicht dem Betrag nach zwischen 160 und 450°, dadurch gekennzeichnet, daß die nematische Flüssigkristallmischung mindestens eine 1,4-disubstituierte 2,3-Difluorbenzolverbindung enthält und folgenden Bedingungen genügt:

– nematischer Phasenbereich von mindestens 60 °C,
– Viskosität von 30 mPa.s oder darunter, und
– $\Delta\varepsilon/\varepsilon_\perp < 2.0$, wobei $\Delta\varepsilon$ die dielektrische Anisotropie und $\varepsilon_\perp$ die Dielektrizitätskonstante in Richtung der kurzen Achse der Flüssigkristallmoleküle bedeutet.

Gegenstand der Erfindung sind ferner entsprechende bevorzugte Anzeigen, die folgenden Bedingungen genügen:

– Produkt von Doppelbrechung $\Delta n$ und der Schichtdicke der Flüssigkristallmischung zwischen 0,1 µm und 2,5 µm,
– Dielektrizitätskonstante $\varepsilon_\perp$ größer oder gleich 4, vorzugsweise größer oder gleich 5,
– dielektrische Anisotropie $\Delta\varepsilon$ größer oder gleich 5,
– die 2,3-Difluorbenzolverbindung enthält eine 4-substituierte 2,3-Difluorphenoxy-Gruppe,
– die 2,3-Difluorbenzolverbindung ist eine Verbindung der Formel I,

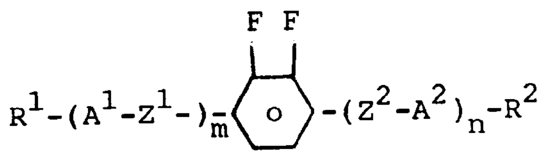

I

worin

$R^1$ und $R^2$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann, einer der Reste $R^1$ und $R^2$ auch F, Cl, CN, NCS, $CF_3$ oder $OCF_3$,

$A^1$ und $A^2$ jeweils unabhängig voneinander

a) trans-1,4-Cyclohexylen, worin auch eine oder zwei nicht benachbarte $CH_2$-Gruppen durch -O- und/oder -S- ersetzt sein können,

b) 1,4-Phenylen, worin auch eine oder zwei CH-Gruppen durch N ersetzt sein können,

c) Rest aus der Gruppe bestehend aus 1,4-Bicyclo(2,2,2)octylen und 1,4-Cyclohexenylen,

wobei die Reste b) durch Fluor ein- oder mehrfach substituiert sein können,

$Z^1$ und $Z^2$ jeweils unabhängig voneinander -CO-O-, -O-CO-, $-CH_2O-$, $-OCH_2-$, $-CH_2CH_2-$ oder eine Einfachbindung,

m und n jeweils unabhängig voneinander 0, 1 oder 2, und

(m + n) 1, 2 oder 3 bedeutet,

– die Flüssigkristallmischung enthält mindestens eine flüssigkristalline Verbindung mit dem Strukturelement,

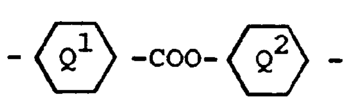

worin $Q^1$ und $Q^2$ unabhängig voneinander trans-1,4-Cyclohexylen, 1,4-Phenylen, 2-Fluor-1,4-phenylen, 3-Fluor-1,4-phenylen oder 2,3-Difluor-1,4-phenylen bedeuten,

– Flüssigkristallmischung enthält mindestens eine Verbindung der nachfolgenden Formeln A bis G:

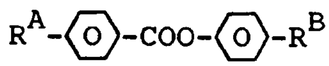 A

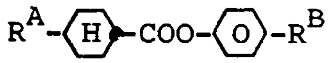 B

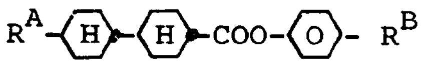 C

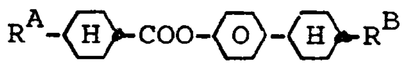 D

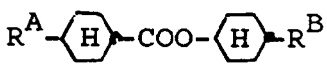 E

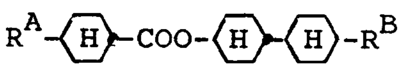 F

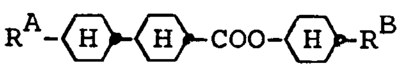 G

worin $R^A$ and $R^B$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann,

– Flüssigkristallmischung enthält mindestens eine Verbindung der nachfolgenden Formeln H bis K:

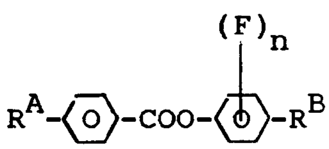 H

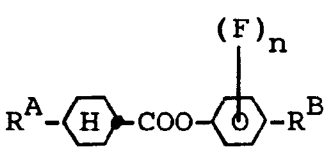 I

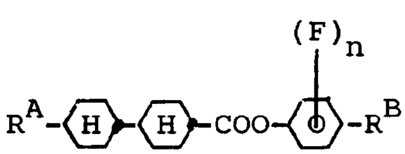 K

worin n 1 oder 2 ist, im Falle n = 2 die beiden Fluoratome benachbart sind und $R^A$ und $R^B$ die oben angegebene Bedeutung haben.

– Flüssigkristallmischung enthält mindestens eine flüssigkristalline Tolanverbindung mit dem Strukturelement

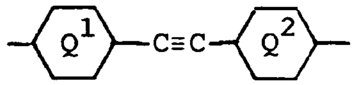

worin $Q^1$ und $Q^2$ unabhängig voneinander 1,4-Phenylen, 2-Fluor-1,4-phenylen, 3-Fluor-1,4-phenylen oder 2,3-Difluor-1,4-phenylen bedeuten,

– Flüssigkristallmischung enthält mindestens eine Verbindung der nachfolgenden Formeln L bis Q:

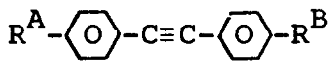

L

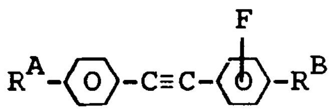

M

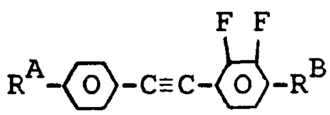

N

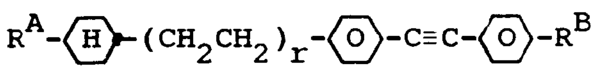

O

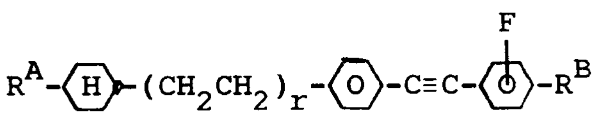

P

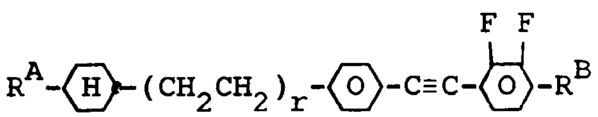

Q

worin $R^A$ und $R^B$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -0-CO- ersetzt sein kann,

– Flüssigkristallmischung enthält mindestens eine Verbindung der nachfolgenden Formeln R und/oder S:

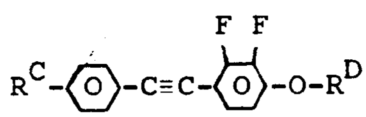

R

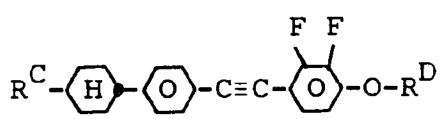

S

worin $R^C$ und $R^D$ jeweils unabhängig voneinander n-Alkyl mit 1 bis 10 C-Atomen oder (trans)-n-Alkenyl mit 3 bis 10 C-Atomen bedeuten,

– Flüssigkristallmischung enthält eine Ethinverbindung der Formel II

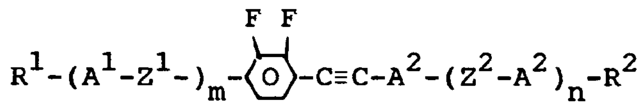 II

worin

$R^1$ und $R^2$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann, einer der Reste $R^1$ und $R^2$ auch F, Cl, CN, NCS, $CF_3$ oder $OCF_3$,

$A^1$ und $A^2$ jeweils unabhängig voneinander

a) trans-1,4-Cyclohexylen, worin auch eine oder zwei nicht benachbarte $CH_2$-Gruppen durch -O- und/oder -S- ersetzt sein können,

b) 1,4-Phenylen, worin auch eine oder zwei CH-Gruppen durch N ersetzt sein können,

c) Rest aus der Gruppe bestehend aus 1,4-Bicyclo(2,2,2)octylen und 1,4-Cyclohexenylen,

wobei die Reste b) durch Fluor ein- oder mehrfach substituiert sein können

$Z^1$ und $Z^2$ jeweils unabhängig voneinander -CO-O-, -O-CO-, $-CH_2O-$, $-OCH_2-$, $-CH_2CH_2$ oder eine Einfachbindung, und

m und n jeweils unabhängig voneinander 0 oder 1 bedeuten,

– Flüssigkristallmischung enthält mindestens eine flüssigkristalline Verbindung mit dem Strukturelement

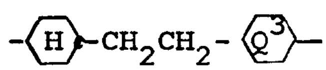

enthält, worin $Q^3$ trans-1,4-Cyclohexylen, 1,4-Phenylen, 2-Fluor-1,4-phenylen, 3-Fluor-1,4-phenylen oder 2,3-Difluor-1,4-phenylen bedeutet,

– Flüssigkristallmischung enthält mindestens eine Verbindung der nachfolgenden Formeln E1 bis E7:

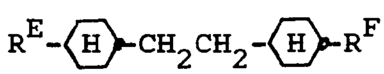 E1

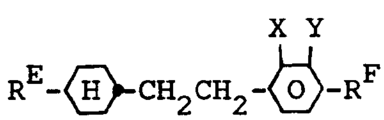 E2

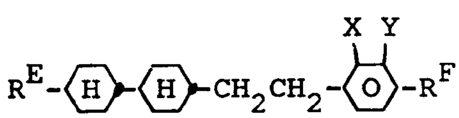 E3

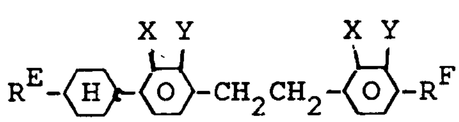 E4

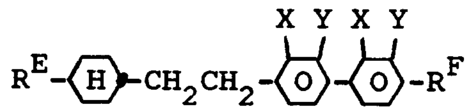

E5

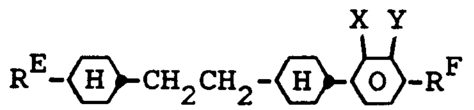

E6

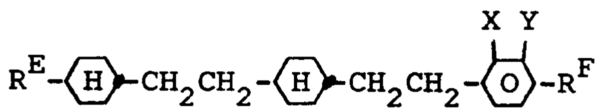

E7

worin $R^E$ jeweils n-Alkyl mit 1 bis 10 C-Atomen oder (trans)-n-Alkenyl mit 3 bis 10 C-Atomen, $R^F$ n-Alkyl mit 1 bis 10 C-Atomen, n-Alkoxy mit 1 bis 10 C-Atomen, (trans)-n-Alkenyl mit 3 bis 10 C-Atomen, F oder CN, und X und Y jeweils unabhängig H oder F bedeuten,

– Flüssigkristallmischung enthält mindestens eine Verbindung der Formeln E3 bis E7,

– Flüssigkristallmischung enthält mindestens eine Verbindung der Formeln E3 bis E7, worin $R^F$ n-Alkyl oder n-Alkenyl und X und Y jeweils H bedeuten,

– Flüssigkristallmischung enthält mindestens eine Verbindung der Formeln E3 bis E7, worin $R^F$ Fluor, X H und Y H oder Fluor bedeutet,

– Flüssigkristallmischung enthält mindestens eine Verbindung der Formeln E3 bis E7, worin $R^F$ Cyan bedeutet.

Gegenstand der Erfindung ist ferner die Verwendung nematischer Flüssigkristallmischungen, enthaltend mindestens eine 1,4-disubstituierte 2,3-Difluorbenzolverbindung und die folgenden Bedingungen genügen:

– nematischer Phasenbereich von mindestens 60 °C,

– Viskosität von 30 mPa.s oder darunter, und

– $\Delta\varepsilon/\varepsilon_\perp < 2.0$, wobei $\Delta\varepsilon$ die dielektrische Anisotropie und $\varepsilon_\perp$ die Dielektrizitätskonstante in Richtung der kurzen Achse der Flüssigkristallmoleküle bedeutet, als Dielektrika von SFK-Anzeigen.

Gegenstand der Erfindung sind schließlich auch entsprechende Flüssigkristallmischungen zur Verwendung in SFK-Anzeigen.

Nematische Flüssigkristallmischungen, die zwei der drei angegebenen Bedingungen genügen sind bekannt und werden in vielfältigen Ausführungsformen kommerziell genutzt. Es ist weiterhin bekannt, daß durch Verwendung hoher Anteile von Phenylbenzoaten entsprechend DE-PS 21 67 252 oder von stark dielektrisch negativen Flüssigkristallen (z.B. entsprechend DE-OS 32 31 707) Werte von $\Delta\varepsilon/\varepsilon_\perp < 2.0$ realisiert werden können. Diese Flüssigkristallmischungen zeichnen sich jedoch durch hohe Viskositäten aus, wobei die Werte bei 20° oft zwischen 40 und 50 mPa.s oder höher liegen. Entsprechende SFK-Anzeigen haben für eine kommerzielle Anwendung somit deutlich zu lange Schaltzeiten.

Die erfindungsgemäßen Flüssigkristallmischungen ermöglichen es jedoch bei niedrigen Viskositäten gleichzeitig einen niedrigen Wert für $\Delta\varepsilon/\varepsilon_\perp$ zu erreichen, wodurch in SKF-Anzeigen hervorragende Steilheiten der elektrooptischen Kennlinie erzielt werden können. Die erfindungsgemäßen Flüssigkristallmischungen haben vorzugsweise ein $\varepsilon_\perp \geqq 4$, insbesondere $\varepsilon_\perp \geqq 5$ bzw. $\geqq 6$. $\Delta\varepsilon/\varepsilon_\perp$ ist vorzugsweise < 1,5, insbesondere $\leqq$ 1,3. Es lassen sich jedoch insbesondere mit Hilfe der Verbindungen der Formel I auch Werte für $\Delta\varepsilon/\varepsilon_\perp \leqq 1.1$ oder sogar $\leqq$ 0,9 erreichen. Derartige Ausführungsformen sind ebenfalls bevorzugt. Die Viskosität bei 20 °C ist vorzugsweise $\leqq$ 25 mPa.s. Der nematische Phasenbereich ist vorzugsweise mindestens 70, insbesondere mindestens 80°. Vorzugsweise erstreckt sich dieser Bereich mindestens von -20° bis +70°.

Zur Erzielung der geforderten Werte für $\Delta\varepsilon/\varepsilon_\perp$ enthalten die erfindungsgemäßen Mischungen vorzugsweise 5-60 % an einer oder mehreren Verbindungen mit einer dielektrischen Anisotropie von unter -2,0. Vorzugsweise ist dieser Anteil > 20 % insbesondere 25-40 %. Die Viskosität dieser Verbindungen ist vorzugsweise 10 bis 50 mPa.s bei 20 °C.

Die einzelnen Verbindungen der Formeln I, II, A bis Q und E1 bis E7, die in den erfindungsgemäßen SFK-Anzeigen verwendet werden können, sind entweder bekannt, oder sie können analog zu den bekannten Verbindungen hergestellt werden.

Bevorzugte erfindungsgemäß verwendbare Flüssigkristallmischungen enthalten insgesamt vorzugsweise 5-60 %, insbesondere 10-40 % an Verbindungen der Formel I. Besonders bevorzugt sind Flüssigkristallmischungen, die neben dielektrisch negativen Verbindungen der Formel I auch mindestens eine Verbindung der Formel I mit positiver dielektrischer Anisotropie enthalten (worin einer der Reste $R^1$ und $R^2$ F, Cl, CN, NCS,

$CF_3$ oder $OCF_3$, vorzugsweise CN oder F bedeutet). Sie enthalten insgesamt vorzugsweise 10-30, insbesondere 12-20 Komponenten. Besonders bevorzugt sind Flüssigkristallmischungen, die bekannte flüssigkristalline Ester des p-Fluorphenols und/oder flüssigkristalline Tolanderivate enthalten. Letztere zeichnen sich durch eine hohe Doppelbrechung und hohe Werte für $K_3/K_1$ aus. Der Einsatz von Tolanderivaten ermöglicht den Übergang zu SFK-Anzeigen mit kleineren Schichtdicken (ca. 5 bis 6 μm), wodurch deutlich kürzere Schaltzeiten resultieren.

Der Anteil der Tolanderivate liegt vorzugsweise bei 5 % bis 35 %, insbesondere bevorzugt bei 10 % bis 30 %. Bevorzugte Tolanderivate sind im folgenden angegeben:

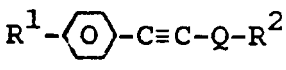 T1

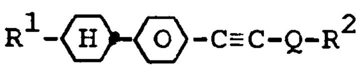 T2

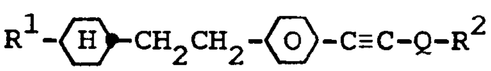 T3

worin $R^1$ und $R^2$ die bei Formel I angegebenen Bedeutungen haben. $R^1$ ist vorzugsweise n-Alkyl mit 1 bis 7 C-Atomen oder n-Alkenyl mit 3 bis 7 C-Atomen. $R^2$ ist vorzugsweise n-Alkoxy oder n-Alkyl mit jeweils 1 bis 7 C-Atomen oder n-Alkenyl oder n-Alkenyloxy mit jeweils 3 bis 7 C-Atomen. Q ist 1,4-Phenylen, 2-Fluor-1,4-Phenylen, 3-Fluor-1,4-phenylen oder 2,3-Difluor-1,4-phenylen. Vorzugsweise enthalten die erfindungsgemäßen Mischungen eine oder mehrere Verbindungen der Formeln T1, T2 und T3, worin Q 2-Fluor-1,4-phenylen, 3-Fluor-1,4-phenylen oder 2,3-Difluor-1,4-phenylen, insbesondere bevorzugt 2,3-Difluor-1,4-phenylen bedeutet.

Die zur Erzielung von kleinen Werten für $\Delta\varepsilon/\varepsilon_\perp$ erforderlichen Komponenten der Formeln I bzw. II sind in den folgenden Deutschen Offenlegungsschriften DE-OS 38 07 801, 38 07 861, 38 07 863, 38 07 864 und 38 07 908 bzw. in der Internationalen Patentanmeldung PCT/DE 88/00133 beschrieben. Vorzugsweise wird der Anteil dieser Verbindungen derart gewählt, daß $\varepsilon_\perp$ der Gesamtmischung mindestens 4.0, vorzugsweise mindestens 5.0 beträgt. Die Verbindungen der Formeln I und II eignen sich hierzu in idealer Weise, da durch deren Zugabe die Viskosität der Gesamtmischung überraschend niedrig bleibt, während stark dielektrisch negative Verbindungen aus dem Stand der Technik, wie zum Beispiel Derivate des 2,3-Dicyanhydrochinons oder Cyclohexanderivate mit dem Strukturelement

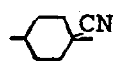

zu einer in vielen Fällen nicht akzeptablen Erhöhung der Viskosität führen.

Vorzugsweise enthält eine Mischung eine oder mehrere dielektrisch negative Verbindungen ($\Delta\varepsilon < -1{,}5$), die gleichzeitig eine hohe optische Anisotropie ($\Delta n > 0{,}15$) aufweisen. Vorzugsweise werden Verbindungen der Formel II eingesetzt.

Vorzugsweise enthalten die erfindungsgemäßen Mischungen Ester-Verbindungen mit dem Strukturelement

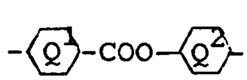

worin $Q^1$ und $Q^2$ unabhängig voneinander trans-1,4-Cyclohexylen, 1,4-Phenylen, 2- oder 3-Fluor-1,4-phenylen oder 2,3-Difluor-1,4-phenylen bedeuten. Letztere stellen bevorzugte Verbindungen der Formel I dar.

Besonders bevorzugt sind Mischungen, die eine oder mehrere Ester-Verbindungen der Formeln A bis G enthalten, wobei Verbindungen der Formeln B, C, D und E besonders bevorzugt sind. Weitere bevorzugte Ester-Verbindungen sind diejenigen der Formeln

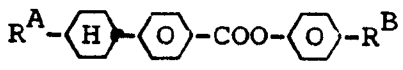

G1

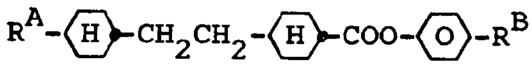

G2

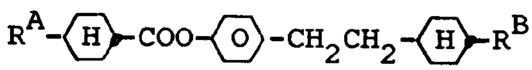

G3

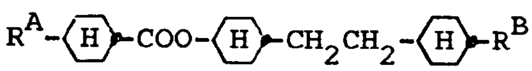

G4

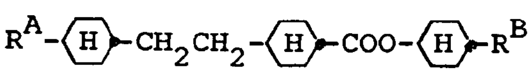

G5

worin $R^A$ und $R^B$ die bei den Formeln A bis G angegebene Bedeutung haben. G1 ist besonders bevorzugt. Der Anteil dieser Ester-Verbindungen kann bis zu ca. 60 %, insbesondere ca. 10 % bis 40 % betragen.

In einer besonders bevorzugten Ausführungsform enthalten die Mischungen eine oder mehrere Verbindungen mit dem Strukturelement

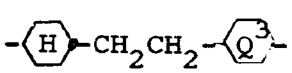,

worin $Q^3$ trans-1,4-Cyclohexylen, 1,4-Phenylen, 2- oder 3-Fluor-1,4-phenylen oder 2,3-Difluor-1,4-phenylen bedeutet. Letztere stellen bevorzugte Verbindungen der Formel I dar. Der Anteil dieser Verbindungen beträgt vorzugsweise 10 % bis 45 %, insbesondere bevorzugt ca. 10 % bis 35 %. Besonders bevorzugt sind die Verbindungen der Formeln E1 bis E7, darunter besonders E3 und E6.

Die erfindungsgemäßen Mischungen enthalten eine oder mehrere Verbindungen mit $\Delta\varepsilon > 1.5$. Die Auswahl dieser in großer Zahl bekannten Verbindungen ist nicht kritisch.. Der Fachmann kann ohne erfinderisches Zutun Art und Anteil dieser Verbindungen zur Erzielung der gewünschten Schwellenspannung festlegen. Der Anteil ist vorzugsweise ca. 30 % bis 70% , insbesondere bevorzugt 40 % bis 60 %. Vorzugsweise werden auch dielektrisch positive Verbindungen der Formel I und/oder II (einer der Reste $R^1$ und $R^2$ F, CN, $CF_3$ oder $OCF_3$) verwendet neben üblichen Komponenten wie z.B.

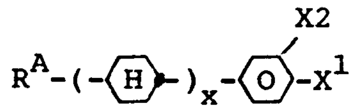

C1

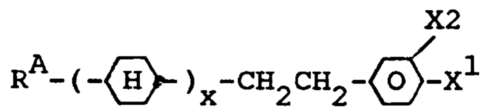

C2

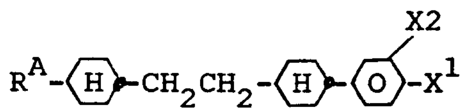

C3

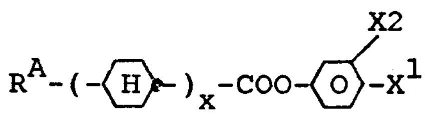

C4

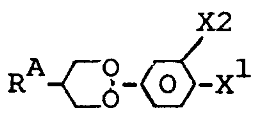

C5

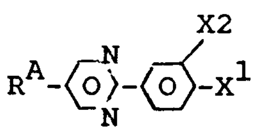

C6

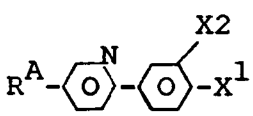

C7

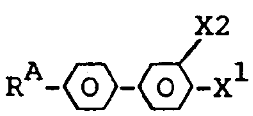

C8

worin $R^A$ die bei den Formeln A bis G angegebene Bedeutung hat, x 1 oder 2, $X^1$ CN oder F und $X^2$ H oder F bedeutet.

Die Wahl der chiralen Dotierstoffe ist an sich nicht kritisch. Der Fachmann kann ohne erfinderisches Zutun Art und Menge der chiralen Komponente zur Erzielung des gewünschten Verhältnisses zwischen Schichtdicke und natürlicher Ganghöhe des Gesamtgemisches (z.B. zwischen 0,3 und 1,3) festlegen.

Die erfindungsgemäßen Anzeigen zeigen neben sehr guten Kennliniensteilheiten auch besonders geringe Winkelabhängigkeit des Kontrastes, d.h. der Wert

$$\beta = \frac{V_{10/10/20} - V_{10/45/20}}{1/2\,(V_{10/10/20} + V_{10/45/20})} \,.\, 100\ \%$$

ist besonders gering.

Die erfindungsgemäßen Mischungen zeigen gleichzeitig günstige elastische Eigenschaften, d.h. insbesondere für $K_3/K_1$.

Bei den erfindungsgemäßen Anzeigen mit einem Verdrillungswinkel dem Betrage nach zwischen 200° und 450°, insbesondere bei solchen im Bereich 220° bis 270°, tritt bei kleinen Verhältnissen $\Delta\varepsilon/\varepsilon_\perp$ zwar eine deutliche Verbesserung der Kennliniensteilheit auf, in vielen Fällen wird jedoch gleichzeitig das für die Massenproduktion sehr wichtige, sogenannte d/p-Fenster (d.h. der Bereich für den Wert des Verhältnisses Schichtdicke des Displays zu der Größe des natürlichen Pitch, innerhalb dessen die gewünschte Verdrillung jedoch noch keine Domainen erhalten werden) sehr klein oder verschwindet sogar in einzelnen Fällen. Das hierdurch bedingte Auftreten von Domänen ist bei kleineren Verdrillungswinkeln (zum Beispiel 180° bei OMI) nicht akut.

Dies hängt vermutlich damit zusammen, daß bei Verdrillungswinkeln im Bereich von 160° bis 220°, insbesondere bei 180°, mit kleinen Anstellwinkeln gearbeitet wird, welche vorzugsweise im Bereich von 1° bis 2° liegen. Bei höheren Verdrillungswinkeln (zum Beispiel im Bereich 220° bis 270°) sind auch höhere Anstellwinkel (zum Beispiel im Bereich von 4° bis 6°) erforderlich. Es wurde nun gefunden, daß die störende Domänenbildung bei diesen Verdrillungswinkeln vermieden werden kann, falls die Flüssigkristallmischung einen effektiven Gehalt an einer oder mehreren Verbindungen aufweist, welche einen Wert $K_3/K_1 < 0,9$ haben. Diese Verbindungen haben vorzugsweise eine dielektrische Anisotropie von -6 bis +2, insbesondere von -2 bis +2 und einen Klärpunkt unter 80°. $K_3/K_1$ ist vorzugsweise $\leqq 0,8$. Der Anteil dieser Verbindungen in den erfindungsgemäßen Mischungen liegt vorzugsweise bei 1 % bis 20 %, insbesondere 5 % bis 15 %. Besonders bevorzugt sind 2-p-n-Alkyl- bzw. 2-p-n-Alkoxyphenyl-5-n-alkylpyrimidine, worin die Alkyl- bzw. Alkoxygruppen bis zu 12 C-Atome aufweisen. Ferner sind bevorzugt trans-1-p-n-Alkanoyloxyphenyl-4-n-alkylcyclohexane, trans,trans-4-n-Alkanoyloxy-4-n-alkylcyclohexyl-cyclohexane und/oder p-n-Alkylbenzoesäure-(p-n-alkylphenylester), worin die Alkanoyloxy-bzw. Alkylgruppen jeweils bis zu 12 C-Atome aufweisen. Ferner bevorzugt sind 2-p-Cyanphenyl-5-n-alkylpyrimidine, worin die Alkylgruppe bis zu 12 C-Atome aufweist.

In einer bevorzugten Ausführungsform enthalten die erfindungsgemäßen Mischungen keine Verbindungen mit einer dielektrischen Anisotropie $\Delta\varepsilon$ von unter -1,5, sondern zur Erzielung der geforderten Werte für $\Delta\varepsilon/\varepsilon_\perp$ einen ausreichenden Anteil an einer oder mehreren Verbindungen mit $\Delta\varepsilon > -1,5$ und hohen Werten für $\varepsilon_\perp$. $\Delta\varepsilon$ ist vorzugsweise im Bereich +3 bis +15, insbesondere +4 bis +9 $\varepsilon_\perp$ ist vorzugsweise im Bereich 5 bis 8.

Bevorzugte Verbindungen dieses Typs sind diejenigen der Formel I, worin $R^2$ F, Cl, -CN, -NCS, $-CF_3$ oder $-OCF_3$ bedeutet. Diese Verbindungen sind Gegenstand der Deutschen Patentanmeldungen 38 07 868, 38 07 822, 38 07 806 und 38 07 864.

Die erfindungsgemäßen Mischungen können ferner auch noch hochklärende Zusätze (Klärpunkt > 180°) enthalten. Der Anteil dieser Verbindungen beträgt vorzugsweise ca. 5 % bis 20 %. Geeignete Verbindungen sind dem Fachmann bekannt. Besonder bevorzugt sind die im folgenden angegebenen Verbindungen:

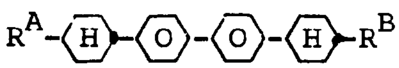

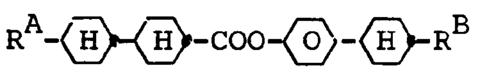

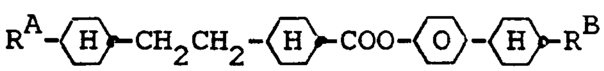

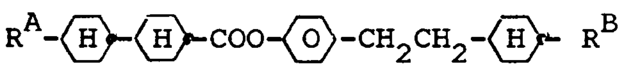

worin $R^A$ und $R^B$ die bei den Formeln A bis G angegebene Bedeutung haben.

Der Aufbau der erfindungsgemäßen Flüssigkristall-Anzeigen aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 450° gegeneinander verdreht ist, entspricht der für derartige Anzeigen üblichen Bauweise. Dabei ist der Begriff der üblichen Bauweise hier weit gefaßt und umfaßt auch alle Abwandlungen und Modifikationen der Supertwistzelle. Der Oberflächentiltwinkel an den beiden Trägerplatten kann gleich oder verschieden sein. Gleiche Tiltwinkel sind bevorzugt.

Der Verdrillungswinkel der erfindungsgemäßen Anzeigen ist vorzugsweise dem Betrage nach zwischen 160° und 360°, insbesondere bevorzugt dem Betrage nach zwischen 220° und 270°.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

In den erfindungsgemäßen Anzeigen werden flüssigkristalline Phasen eingesetzt, bei denen die Flüssigkristallparameter $\Delta\varepsilon$ und $\Delta\varepsilon/\varepsilon_\perp$ so gewählt werden, daß eine möglichst steile elektrooptische Kennlinie gewährleistet ist, zusammen mit einem maximalen Kontrast und einer minimalen Blickwinkelabhängigkeit bei einem nematischen Phasenbereich von mindestens 60° und einer Viskosität von 30 mPa.s oder darunter.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch

möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Alle Komponenten der erfindungsgemäßen Mischungen sind bekannt bzw. können in Analogie zu bekannten Verbindungen nach an sich bekannten Verfahren hergestellt werden.

Die Dielektrika können auch weitere, dem Fachmann bekannte und in der Literatur beschriebene Zusätze enthalten. Beispielsweise können 0-15 % pleochroitische Farbstoffe zugesetzt werden.

Die folgenden Beispiele sollen die Erfindung erläutern, ohne sie zu begrenzen.

Es bedeutet:

| | |
|---|---|
| S-N | Phasenübergangs-Temperatur smektisch-nematisch, |
| Klp. | Klärpunkt, |
| Visk. | Viskosität bei 20° (m Pa.s) (Bulkviskosität), |
| $V_{50}/V_{10}$ | Steilheit der Kennlinie eines SFK-Anzeigeelements bei 20°. |

Vor und nachstehend sind alle Temperaturen in °C angegeben. Die Prozentzahlen sind Gewichtsprozente. Die physikalischen Daten sind jeweils auf 20 °C bezogen. Die Einzelverbindungen betreffende Daten (z.B. dielektrische und elastische Daten) sind bezogen auf 20 °C.

Alle das Gesamtgemisch betreffenden Werte beziehen sich auf 20 °C.

Beispiel 1

Eine SFK-Anzeige mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 1,06 |

enthaltend eine Flüssigkristallmischung mit folgenden Parametern:

| | |
|---|---|
| Klärpunkt | 84,7° |
| Δn | 0,1275 (589 nm) |
| | 0,1257 (633 nm) |
| Viskosität | 23,4 mPa.s |
| Δε | +8,3 |
| $\varepsilon_{\perp}$ | 6,0 |

und bestehend aus

| | |
|---|---|
| 15 % | p-trans-4-Propylcyclohexyl-benzonitril, |
| 7 % | p-trans-4-Butylcyclohexyl-benzonitril, |
| 8 % | 4-Ethyl-4′-cyanbiphenyl, |
| 7 % | 4-Propyl-4′-cyanbiphenyl, |
| 8 % | 4-Butyl-4′-cyanbiphenyl, |
| 19 % | trans-4-Pentylcyclohexancarbonsäure-(2,3-difluor-4-ethoxyphenylester), |
| 6 % | trans-4-(trans-4-Propylcyclohexyl)-cyclohexancarbonsäure-(p-propylphenylester), |
| 6 % | trans-4-(trans-4-Propylcyclohexyl)-cyclohexancarbonsäure-(p-pentylphenylester), |
| 6 % | trans-4-(trans-4-Butylcyclohexyl)-cyclohexancarbonsäure-(p-pentylphenylester), |
| 6 % | trans-4-(trans-4-Butylcyclohexyl)-cyclohexancarbonsäure-(p-propylphenylester), |
| 6 % | trans-4-Butylcyclohexancarbonsäure-(p-trans-4-propylcyclohexylphenylester), und |
| 6 % | trans-4-Pentylcyclohexancarbonsäure-(p-trans-4-propylcyclohexylphenylester) |

zeigt eine Kennliniensteilheit $V_{50}/V_{10}$ von 3,4 %.

Beispiel 2

Man stellt eine nematische Flüssigkristallmischung her bestehend aus
15% 2,3-Difluor-4-(trans-4-propylcyclohexylethyl)benzonitril,
15% 2,3-Difluor-4-(trans-4-butylcyclohexylethyl)benzonitril,
10 % 2,3-Difluor-4-(trans-4-pentylcyclohexylethyl)benzonitril,
9 % trans-4-Propylcyclohexancarbonsäure-(trans-4-propylcyclohexylester),
9 % trans-4-Propylcyclohexancarbonsäure-(trans-4-pentylcyclohexylester),
6 % trans-4-(trans-4-Propylcyclohexyl)-cyclohexancarbonsäure-(p-propylphenylester),
6 % trans-4-(trans-4-Propylcyclohexyl)-cyclohexancarbonsäure-(p-pentylphenylester),
6 % trans-4-(trans-4-Butylcyclohexyl)-cyclohexancarbonsäure-(p-pentylphenylester),
6 % trans-4-(trans-4-Butylcyclohexyl)-cyclohexancarbonsäure-(p-propylphenylester),
6 % trans-4-Butylcyclohexancarbonsäure-(p-trans-4-propylcyclohexylphenylester),
6% trans-4-Pentylcyclohexancarbonsäure-(p-trans-4-propylcyclohexylphenylester),
3% 4,4′-Bis-(trans-4-propylcyclohexyl)-2-fluorbiphenyl und
3% 4-(trans-4-Pentylcyclohexyl)-4′-(trans-4-propylcyclohexyl)-2-fluorbiphenyl.

Beispiel 3

Man stellt eine nematische Flüssigkristallmischung her bestehend aus
15% p-trans-4-Propylcyclohexyl-benzonitril,
8% 4-Ethyl-2′,3′-difluor-4′-cyanbiphenyl,
7% 4-Propyl-2′,3′-difluor-4′-cyanbiphenyl,
8% 4-Butyl-2′,3′-difluor-4′-cyanbiphenyl,
5% trans-4-Propylcyclohexancarbonsäure-(p-methoxyphenylester),
4% trans-4-Propylcyclohexancarbonsäure-(p-ethoxyphenylester),
5% trans-4-Butylcyclohexancarbonsäure-(p-methoxyphenylester),
4% trans-4-Butylcyclohexancarbonsäure-(p-ethoxyphenylester),
4% trans-4-Pentylcyclohexancarbonsäure-(p-ethoxyphenylester),
4% trans-4-Pentylcyclohexancarbonsäure-(p-methoxyphenylester),
6% trans-4-(trans-4-Propylcyclohexyl)-cyclohexancarbonsäure-(p-propylphenylester),
6% trans-4-(trans-4-Propylcyclohexyl)-cyclohexancarbonsäure-(p-pentylphenylester),
5% trans-4-(trans-4-Butylcyclohexyl)-cyclohexancarbonsäure-(p-pentylphenylester),
5% trans-4-(trans-4-Butylcyclohexyl)-cyclohexancarbonsäure-(p-propylphenylester),
8% p-trans-4-Propylcylohexylbenzoesäure-(p-propylphenylester) und
6% p-trans-4-Pentylcyclohexylbenzoesäure-(p-propylphenylester).

Beispiel 4

Man stellt eine nematische Flüssigkristallmischung her bestehend aus
9% p-Ethylbenzoesäure-(4-cyan-2,3-difluorphenylester),
9% p-Propylbenzoesäure-(4-cyan-2,3-difluorphenylester),
8% p-Pentylbenzoesäure-(4-cyan-2,3-difluorphenylester),
9% trans,trans-4-Methoxy-4′-methylcyclohexylcyclohexan,
17% trans-4-Propylcyclohexancarbonsäure-(trans-4-propylcyclohexylester),
8% trans-4-Propylcyclohexancarbonsäure-(trans-4-pentylcyclohexylester),
4% trans-4-Butylcyclohexancarbonsäure-(p-trans-4-propylcyclohexylphenylester),
4% trans-4-Pentylcyclohexancarbonsäure-(p-trans-4-propylcyclohexylphenylester),
4% trans-4-(trans-4-Propylcyclohexyl)-cyclohexancarbonsäure-(p-propylphenylester),
4% trans-4-(trans-4-Propylcyclohexyl)-cyclohexancarbonsäure-(p-pentylphenylester),
4% trans-4-(trans-4-Butylcyclohexyl)-cyclohexancarbonsäure-(p-pentylphenylester),
4% trans-4-(trans-4-Butylcyclohexyl)-cyclohexancarbonsäure-(p-propylphenylester),
3% 1-[trans-4-(trans-4-Pentylcyclohexyl)-cyclohexyl]-2-(p-propylphenyl)-ethan,
3% 1-[trans-4-(trans-4-Propylcyclohexyl)-cyclohexyl]-2-(p-propylphenyl)-ethan,
3% 4,4′-Bis-(trans-4-propylcyclohexyl)-2-fluorbiphenyl,
3% 4,4′-Bis-(trans-4-pentylcyclohexyl)-2-fluorbiphenyl und

4% 4-(trans-4-Pentylcyclohexyl)-4′-(trans-4-propylcyclohexyl)-2-fluorbiphenyl.

Beispiel 5

Eine SFK-Anzeige mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 1,0 |

enthaltend eine Flüssigkristallmischung mit folgenden Parametern:

| | |
|---|---|
| Klärpunkt | 85° |
| Δn | 0,141 |
| Viskosität | 22,4 mPa.s |
| Δε | +7,2 |
| $\varepsilon_\perp$ | 5,5 |
| $K_3/K_1$ | 1,42 |

und bestehend aus
9 % p-trans-4-Propylcyclohexyl-benzonitril,
7 % 4-Ethyl-4′-cyanbiphenyl,
7 % 4-Propyl-4′-cyanbiphenyl,
7 % 4-Butyl-4′-cyanbiphenyl,
5 % trans-4-Propylcyclohexancarbonsäure-(p-fluorphenylester),
4 % trans-4-Propylcyclohexancarbonsäure-(p-methoxyphenylester),
4 % trans-4-Propylcyclohexancarbonsäure-(p-ethoxyphenylester),
4 % trans-4-Butylcyclohexancarbonsäure-(p-ethoxyphenylester),
4 % trans-4-Butylcyclohexancarbonsäure-(p-methoxyphenylester),
13 % 2,3-Difluor-4-ethoxy-4′-pentyl-tolan,
5 % trans-4-(trans-4-Propylcyclohexyl)-cyclohexancarbonsäure-(p-propylphenylester),
5 % trans-4-(trans-4-Propylcyclohexyl)-cyclohexancarbonsäure-(p-pentylphenylester),
5 % trans-4-(trans-4-Propylcyclohexyl)-cyclohexancarbonsäure-(p-fluorphenylester),
5 % trans-4-(trans-4-Pentylcyclohexyl)-cyclohexancarbonsäure-(p-fluorphenylester),
4 % trans-4-(trans-4-Pentylcyclohexyl)-cyclohexancarbonsäure-(2,3,4-trifluorphenylester),
6 % trans-4-Butylcyclohexancarbonsäure-(p-trans-4-propylcyclohexylphenylester) und
6 % trans-4-Pentylcyclohexancarbonsäure-(p-trans-4-propylcyclohexylphenylester)
zeigt eine Kennliniensteilheit $V_{50}/V_{10}$ von 3,4 %.

Als chiraler Dotierstoff wurde jeweils S-811[p-(p-n-Hexylbenzoyloxyphenyl)-benzoesäure-(2-octylester)] eingesetzt.

Beispiel 6

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,36 |
| d.Δn | 0,85 |

enthaltend eine Flüssigkristallmischung mit folgenden Parametern:

| | |
|---|---|
| Klärpunkt | 94° |
| Δn | 0,1238 (589 nm) |
| Viskosität | 25 mPa.s |
| Δε | +7,5 |
| $\varepsilon_{\perp}$ | 5,9 |

und bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
7 % trans-4-Propylcyclohexancarbonsäure-(2,3-difluor-4-ethoxyphenylester),
6 % trans-4-Pentylcyclohexancarbonsäure-(2,3-difluor-4-ethoxyphenylester),
7 % trans,trans-4-Propylcyclohexylcyclohexan-4′-carbonsäure-(2,3-difluor-4-ethoxyphenylester),
5 % 4-(trans-4-Propylcyclohexyl)-2′,3′-difluor-4′-ethoxy-tolan,
5 % 4-(trans-4-Pentylcyclohexyl)-2′,3′-difluor-4′-ethoxy-tolan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
4 % 1-[trans-4-(trans-4-Propylcyclohexyl)-cyclohexyl]-2-(p-cyanphenyl)-ethan und
6 % 1-[trans-4-(trans-4-Propylcyclohexyl)-cyclohexyl]-2-(p-fluorphenyl)-ethan
zeigt eine Kennliniensteilheit $V_{50}/V_{10}$ von 2,7 %.

Dieselbe Mischung zeigt in einer SFK-Anzeige mit höherem Anstellwinkel (5°), d/p = 0,40, d.Δn = 0,85 und 220° Verdrillungswinkel eine Steilheit $V_{50}/V_{10}$ von 2,9 % und einen Wert ß für die Winkelabhängigkeit des Kontrastes von 0,4 %.

Beispiel 7

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,4° |
| d.Δn | 0,85 |

enthaltend eine Flüssigkristallmischung mit folgenden Parametern:

| | |
|---|---|
| Klärpunkt | 91° |
| Δn | 0,1085 (589 nm) |
| Viskosität | 25 mPa.s |
| Δε | +8,2 |
| $\varepsilon_{\perp}$ | 5,1 |

und bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
7 % trans-4-Propylcyclohexancarbonsäure-(2,3-difluor-4-ethoxyphenylester),
6 % trans-4-Pentylcyclohexancarbonsäure-(2,3-difluor-4-ethoxyphenylester),
7 % trans,trans-4-Propylcyclohexylcyclohexan-4′-carbonsäure-(2,3-difluor-4-ethoxyphenylester),
8 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-cyanphenyl)-ethan und
8 % 1-[trans-4-(trans-4-Propylcyclohexyl)-cyclohexyl]-2-(p-fluorphenyl)-ethan
zeigt eine Kennliniensteilheit $V_{50}/V_{10}$ von 2,2 %.

Beispiel 8

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,41 |
| d.Δn | 0,85 |

enthaltend eine Flüssigkristallmischung mit folgenden Parametern:

| | |
|---|---|
| Klärpunkt | 88° |
| Δn | 0,1569 (589 nm) |
| Viskosität | 22 mPa.s |
| Δε | +7,8 |
| $\varepsilon_{\perp}$ | 5,9 |

und bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
9 % 4-Propyl-2′,3′-difluor-4′-ethoxy-tolan,
9 % 4-Pentyl-2′,3′-difluor-4′-ethoxy-tolan,
6 % 4-(trans-4-Propylcyclohexyl)-2′,3′-difluor-4-ethoxy-tolan

6 % 4-(trans-4-Pentylcyclohexyl)-2′,3′-difluor-4′-ethoxy-tolan
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcylcohexyl)-cyclohexyl]-2-(p-pentylphenyl)-ethan,
4 % 1-[trans-4-(trans-4-Propylcylcohexyl)-cyclohexyl]-2-(p-cyanphenyl)-ethan und
6 % 1-[trans-4-(trans-4-Propylcyclohexyl)-cyclohexyl]-2-(p-fluorphenyl)-ethan
zeigt eine Kennliniensteilheit $V_{50}/V_{10}$ von 3,7 %.

Beispiel 9

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,42 |
| d.Δn | 0,85 |

enthaltend eine Flüssigkristallmischung mit folgenden Parametern:

| | |
|---|---|
| Klärpunkt | 94° |
| Δn | 0,1420 (589 nm) |
| Viskosität | 23 mPa.s |
| Δε | +8,3 |
| $\varepsilon_{\perp}$ | 5,0 |

und bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
12 % 4-Pentyl-2′,3′-difluor-4′-ethoxy-tolan,
5 % 4-(trans-4-Propylcyclohexyl)-2′,3′-difluor-4′-ethoxy-tolan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
4 % 1-[trans-4-(trans-4-Propylcyclohexyl)-cyclohexyl]-2-(p-cyanphenyl)-ethan und
6 % 1-[trans-4-(trans-4-Propylcyclohexyl)-cyclohexyl]-2-(p-fluorphenyl)-ethan
zeigt eine Kennliniensteilheit $V_{50}/V_{10}$ von 3,6 %.

Beispiel 10

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,44 |
| d.Δn | 0,85 |

enthaltend eine Flüssigkristallmischung mit folgenden Parametern:

| | |
|---|---|
| Klärpunkt | 92° |
| Δn | 0,1250 (589 nm) |
| Viskosität | 21 mPa.s |
| Δε | +8,2 |
| $\varepsilon_{\perp}$ | 4,3 |

und bestehend aus
15 % p-trans-4-Propylcylcohexyl-benzonitril,
11% p-trans-4-Butylcyclohexyl-benzonitril,
11% p-trans-4-Pentylcyclohexyl-benzonitril,
5 % p-trans-4-Ethylcyclohexyl-benzonitril,
10% 4-Pentyl-2′,3′-difluor-4-ethoxy-tolan,
8 % 1-[trans-4-(trans-4-Propylcyclohexyl)-cyclohexyl)-2-(p-methylphenyl)-ethan,
8 % 1-[trans-4-(trans-4-Propylcyclohexyl)-cyclohexyl)-2-(p-ethylphenyl)-ethan,
8 % 1-[trans-4-(trans-4-Propylcyclohexyl)-cyclohexyl)-2-(p-propylphenyl)-ethan,
8 % 1-[trans-4-(trans-4-Propylcyclohexyl)-cyclohexyl)-2-(p-pentylphenyl)-ethan,
8 % 1-[trans-4-(trans-4-Propylcyclohexyl)-cyclohexyl)-2-(p-cyanphenyl)-ethan und
8 % 1-[trans-4-(trans-4-Propylcyclohexyl)-cyclohexyl)-2-(p-fluorphenyl)-ethan
zeigt eine Kennliniensteilheit $V_{50}/V_{10}$ von 4,0 %.

Beispiel 11

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,37 |
| d.Δn | 0,85 |

enthaltend eine Flüssigkristallmischung mit folgenden Parametern:

| | |
|---|---|
| Klärpunkt | 88° |
| Δn | 0,1544 (589 nm) |
| Viskosität | 26 mPa.s |
| Δε | +7,3 |
| $\varepsilon_{\perp}$ | 6,4 |

und bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
7 % trans-4-Propylcyclohexancarbonsäure-(2,3-difluor-4-ethoxyphenylester),
6 % trans-4-Butylcyclohexancarbonsäure-(2,3-difluor-4-ethoxyphenylester),
7 % trans-4-Pentylcyclohexancarbonsäure-(2,3-difluor-4-ethoxyphenylester),
6 % 4-Propyl-2′,3′-difluor-4′-ethoxy-tolan,
4 % 4-(trans-4-Propylcyclohexyl)-2′,3′-difluor-4′-ethoxy-tolan,
6 % 4-(trans-4-Propylcyclohexyl)-4′-methoxy-tolan,
5 % 4-(trans-4-Propylcyclohexyl)-4′-ethoxy-tolan,
7 % 4-(trans-4-Propylcyclohexyl)-4′-propoxy-tolan,
6 % 1-[trans-(trans-4-Propylcyclohexyl)-cyclohexyl]-2-(p-methylphenyl)-ethan und
4 % 1-[trans-(trans-4-Propylcyclohexyl)-cyclohexyl]-2-(p-propylphenyl)-ethan
zeigt eine Kennliniensteilheit $V_{50}/V_{10}$ von 2,7 und eine Winkelabhängigkeit des Kontrastes β = 0,9 %.

Beispiel 12

Eine SFK-Anzeige mit folgenden Parametern:

| | |
|---|---|
| Verdrillungswinkel | 220° |
| Anstellwinkel | 1° |
| d/p (Schichtdicke/Ganghöhe) | 0,45 |
| d.Δn | 0,85 |

enthaltend eine Flüssigkristallmischung mit folgenden Parametern:

| | |
|---|---|
| Klärpunkt | 78° |
| Δn | 0,1206 (589 nm) |
| Viskosität | 25 mPa.s |
| Δε | +7,0 |
| $\varepsilon_{\perp}$ | 5,3 |

und bestehend aus
15 % p-trans-4-Propylcyclohexyl-benzonitril,
11 % p-trans-4-Butylcyclohexyl-benzonitril,
9 % p-trans-4-Pentylcyclohexyl-benzonitril,

6 % trans-4-Pentylcyclohexancarbonsäure-(2,3-difluor-4-ethoxyphenylester),
7 % trans-4-Propylcyclohexancarbonsaure-(2,3-difluor-4-ethoxyphenylester),
7 % trans-4-(trans-4-Propylcyclohexyl)-cyclohexancarbonsäure-(2,3-difluor-4-ethoxyphenylester),
7 % 2-p-Methoxyphenyl-5-hexylpyrimidin,
7 % 2-p-Pentyloxyphenyl-5-hexylpyrimidin,
7 % 2-p-Heptyloxyphenyl-5-hexylpyrimidin,
6 % 1-(trans-4-(trans-4-Propyicyclohexyl)-cyclohexyl)-2-(p-methylphenyl)-ethan,
6 % 1-(trans-4-(trans-4-Propylcyclohexyl)-cyclohexyl)-2-(p-propylphenyl)-ethan,
6 % 1-(trans-4-(trans-4-Propylcyclohexyl)-cyclohexyl)-2-(p-pentylphenyl)-ethan und
6 % 1-(trans-4-(trans-4-Propylcyclohexyl)-cyclohexyl)-2-(p-cyanphenyl)-ethan
zeigt eine Kennliniensteilheit $V_{90}/V_{10}$ von 7,5 % und ein d/p-Fenster von 0,42 - 0,53.

Beispiel 13

Man stellt eine nematische Flüssigkristallmischung her bestehend aus
15 % 2,3-Difluor-4-(trans-4-propylcyclohexylethyl)-benzonitril,
15 % 2,3-Difluor-4-(trans-4-butylcyclohexylethyl)-benzonitril,
10 % 2,3-Difluor-4-(trans-4-pentylcyclohexylethyl)-benzonitril,
9 % trans-4-Propylcyclohexancarbonsäure-(2-fluor-4-propylphenylester),
9 % trans-4-Propylcyclohexancarbonsäure-(trans-4-pentylcyclohexylester),
6 % trans-4-(trans-4-Propylcyclohexyl)-cyclohexancarbonsäure-(p-propylphenylester),
6 % trans-4-(trans-4-Propylcyclohexyl)-cyclohexancarbonsäure-(p-pentylphenylester),
6 % trans-4-(trans-4-Butylcyclohexyl)-cyclohexancarbonsäure-(p-pentylphenylester),
6 % trans-4-(trans-4-Butylcyclohexyl)-cyclohexancarbonsäure-(p-propylphenylester),
6 % trans-4-Butylcyclohexancarbonsäure-(p-trans-4-propylcyclohexylphenylester),
6 % trans-4-Pentylcyclohexancarbonsäure-(p-trans-4-propylcyclohexylphenylester),
3 % 4,4′-Bis-(trans-4-propylcyclohexyl)-2-fluorbiphenyl und
3 % 4-(trans-4-Pentylcyclohexyl)-4′-(trans-4-propylcyclohexyl)-2-fluorbiphenyl.

Beispiel 14

Man stellt eine nematische Flüssigkristallmischung her bestehend aus
9 % p-Ethylbenzoesäure-(4-cyan-2,3-difluorphenylester),
9 % p-Propylbenzoesäure-(4-cyan-2,3-difluorphenylester),
8 % p-Pentylbenzoesäure-(4-cyan-2,3-difluorphenylester),
9 % trans,trans-4-Methoxy-4′-methylcyclohexylcyclohexan,
17 % trans-4-Propylcyclohexancarbonsäure-(trans-4-propylcyclohexylester),
8 % trans-4-Propylcyclohexancarbonsäure-(trans-4-pentylcyclohexylester),
4 % trans-4-Butylcyclohexancarbonsäure-(p-trans-4-propylcyclohexylphenylester),
4 % trans-4-Pentylcyclohexancarbonsäure-(p-trans-4-propylcyclohexylphenylester),
4 % trans-4-(trans-4-Propylcyclohexyl)-cyclohexancarbonsäure-(p-propylphenylester),
4 % trans-4-(trans-4-Propylcyclohexyl)-cyclohexancarbonsäure-(p-pentylphenylester),
4 % trans-4-(trans-4-Butylcyclohexyl)-cyclohexancarbonsäure-(p-pentylphenylester),
4 % trans-4-(trans-4-Butylcyclohexyl)-cyclohexancarbonsäure-(p-propylphenylester),
3 % 1-[ p-(trans-4-Pentylcyclohexyl)-phenyl]-2-(p-propylphenyl)-ethan,
3 % 1-[trans-4-(trans-4-Propylcyclohexyl)-cyclohexyl]-2-(p-propylphenyl)-ethan,
3 % 4,4′-Bis-(trans-4-propylcyclohexyl)-2-fluorbiphenyl,
3 % 4,4′-Bis-(trans-4-pentylcyclohexyl)-2-fluorbiphenyl und
4 % 4-(trans-4-Pentylcyclohexyl)-4′-(trans-4-propylcyclohexyl)-2-fluorbiphenyl.

Beispiel 15

Man stellt eine Flüssigkristallmischung her bestehend aus
9 % p-trans-4-Propylcyclohexyl-benzonitril,
7 % 4-Ethyl-4′-cyanbiphenyl,
7 % 4-Propyl-4′-cyanbiphenyl,
7 % 4-Butyl-4′-cyanbiphenyl,
5 % trans-4-Propylcyclohexancarbonsäure-(p-fluorphenylester),

4 % trans-4-Propylcyclohexancarbonsäure-(p-methoxyphenylester),
4 % trans-4-Propylcyclohexancarbonsäure-(p-ethoxyphenylester),
4 % trans-4-Butylcyclohexancarbonsäure-(p-ethoxyphenylester),
4 % trans-4-Butylcyclohexancarbonsäure-(p-methoxyphenylester),
13 % 4-Ethoxy-4′-pentyl-tolan,
5 % trans-4-(trans-4-Propylcyclohexyl)-cyclohexancarbonsäure-(p-propylphenylester),
5 % trans-4-(trans-4-Propylcyclohexyl)-cyclohexancarbonsäure-(p-pentylphenylester),
5 % trans-4-(trans-4-Propylcyclohexyl)-cyclohexancarbonsäure-(p-fluorphenylester),
5 % trans-4-(trans-4-Pentylcyclohexyl)-cyclohexancarbonsäure-(p-fluorphenylester),
4 % trans-4-(trans-4-Pentylcyclohexyl)-cyclohexancarbonsäure-(2,3,4-trifluorphenylester),
6 % trans-4-Butylcyclohexancarbonsäure-(p-trans-4-propylcyclohexylphenylester) und
6 % trans-4-Pentylcyclohexancarbonsäure-(p-trans-4-propylcyclohexylphenylester).

Beispiel 16

Man stellt eine Flüssigkristallmischung her bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
7 % trans-4-Propylcyclohexancarbonsäure-(2,3-difluor-4-ethoxyphenylester),
6 % trans-4-Pentylcyclohexancarbonsäure-(2,3-difluor-4-ethoxyphenylester),
7 % trans,trans-4-Propylcyclohexylcyclohexan-4′-carbonsäure-(2,3-difluor-4-ethoxyphenylester),
5 % 4-(trans-4-Propylcyclohexyl)-2′,3′-difluor-4′-ethoxy-tolan,
5 % 2-(2,3-Difluor-4-ethoxyphenyl)-5-heptylpyrimidin,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
4 % 1-[trans-4-(trans-4-Propylcyclohexyl)-cyclohexyl]-2-(p-cyanphenyl)-ethan und
6 % 1-[trans-4-(trans-4-Propylcyclohexyl)-cyclohexyl]-2-(p-fluorphenyl)-ethan.

Beispiel 17

Man stellt eine Flüssigkristallmischung her bestehend aus
15 % p-trans-4-Propylcyclohexyl-benzonitril,
11 % p-trans-4-Butylcyclohexyl-benzonitril,
11 % p-trans-4-Pentylcyclohexyl-benzonitril,
5 % p-trans-4-Ethylcyclohexyl-benzonitril,
7 % trans-4-Propylcyclohexancarbonsäure-(2,3-difluor-4-ethoxyphenylester),
6 % trans-4-Butylcyclohexancarbonsäure-(2,3-difluor-4-ethoxyphenylester),
7 % trans-4-Pentylcyclohexancarbonsäure-(2,3-difluor-4-ethoxyphenylester),
6 % 4-Propyl-2′,3′-difluor-4′-ethoxy-tolan,
4 % 4-(trans-4-Propylcyclohexyl)-2′,3′-difluor-4′-ethoxy-tolan,
6 % 4-(trans-4-Propylcyclohexylethyl)-4′-methoxy-tolan,
5 % 4-(trans-4-Propylcyclohexyl)-4′-ethoxy-tolan,
7 % 4-(trans-4-Propylcyclohexyl)-4′-propoxy-tolan,
6 % 1-[trans-(trans-4-Propylcyclohexyl)-cyclohexyl]-2-(p-methylphenyl)-ethan und
4 % 1-[trans-(trans-4-Propylcyclohexyl)-cyclohexyl]-2-(p-propylphenyl)-ethan.

Als chiraler Dotierstoff wurde jeweils S-811[p-(p-n-Hexylbenzoyloxyphenyl)-benzoesäure-(2-octylester)] eingesetzt.

## Patentansprüche

1. Supertwist-Flüssigkristallanzeige mit
   – zwei planparallelen Trägerplatten, die mit einer Umrandung eine Zelle bilden,
   – einer in der Zelle befindlichen nematischen Flüssigkristallmischung mit positiver dielektrischer Anisotropie und mit mindestens einem chiralen Dotierstoff,

– Elektrodenschichten mit darüberliegenden Orientierungsschichten auf den Innenseiten der Trägerplatten,
– einem Anstellwinkel zwischen der Längsachse der Moleküle an der Oberfläche der Trägerplatten und den Trägerplatten von etwa 1° bis 30°, und
– einem Verdrillungswinkel der Flüssigkristallmischung in der Zelle von Orientierungsschicht zu Orientierungsschicht dem Betrag nach zwischen 160° und 450°, dadurch gekennzeichnet, daß die nematische Flüssigkristallmischung mindestens eine 1,4-disubstituierte 2,3-Difluorbenzolverbindung enthält und folgenden Bedingungen genügt:
– nematischer Phasenbereich von mindestens 60 °C,
– Viskosität von 30 mPa.s oder darunter, und
– $\Delta\varepsilon/\varepsilon_{\perp} < 2.0$, wobei $\Delta\varepsilon$ die dielektrische Anisotropie und $\varepsilon_{\perp}$ die Dielektrizitätskonstante in Richtung der kurzen Achse der Flüssigkristallmoleküle bedeutet.

2. Anzeige nach Anspruch 1, dadurch gekennzeichnet, daß das Produkt von Doppelbrechung $\Delta n$ und der Schichtdicke der Flüssigkristallmischung zwischen 0,1 μm und 2,5 μm liegt.

3. Anzeige nach mindestens einem der Ansprüche 1 und 2, dadurch gekennzeichnet, daß die Dielektrizitätskonstante $\varepsilon_{\perp}$ größer oder gleich 4 ist.

4. Anzeige nach mindestens einem der Ansprüche 1 bis 3, dadurch gekennzeichnet, daß die dielektrische Anisotropie $\Delta\varepsilon$ größer oder gleich 5 ist.

5. Anzeige nach mindestens einem der Ansprüche 1 bis 4, dadurch gekennzeichnet, daß die Dielektrizitätskonstante $\varepsilon_{\perp}$ größer oder gleich 5 ist.

6. Anzeige nach Anspruch 1, dadurch gekennzeichnet, daß die 2,3-Difluorbenzolverbindung eine 4-substituierte 2,3-Difluorphenoxy-Gruppe enthält.

7. Anzeige nach Anspruch 1, dadurch gekennzeichnet, daß die 2,3-Difluorbenzolverbindung eine Verbindung der Formel I ist,

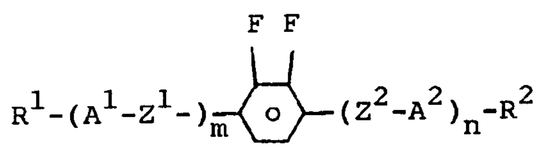

I

worin

$R^1$ und $R^2$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann, einer der Reste $R^1$ und $R^2$ auch F, Cl, CN, NCS, $CF_3$ oder $OCF_3$,

$A^1$ und $A^2$ jeweils unabhängig voneinander

a) trans-1,4-Cyclohexylen, worin auch eine oder zwei nicht benachbarte $CH_2$-Gruppen durch -O- und/oder -S- ersetzt sein können,
b) 1,4-Phenylen, worin auch eine oder zwei CH-Gruppen durch N ersetzt sein können,
c) Rest aus der Gruppe bestehend aus 1,4-Bicyclo-(2,2,2)octylen und 1,4-Cyclohexenylen,

wobei die Reste b) durch Fluor ein- oder mehrfach substituiert sein können,

$Z^1$ und $Z^2$ jeweils unabhängig voneinander -CO-O-, -O-CO-, $-CH_2O-$, $-OCh_2-$, $-CH_2CH_2-$ oder eine Einfachbindung,

m und n jeweils unabhängig voneinander 0, 1 oder 2, und

(m + n) 1, 2 oder 3 bedeutet.

8. Anzeige nach mindestens einem der Ansprüche 1 bis 7, dadurch gekennzeichnet, daß die Flüssigkristallmischung mindestens eine flüssigkristalline Verbindung mit dem Strukturelement

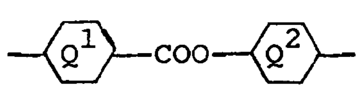

enthält, worin $Q^1$ und $Q^2$ unabhängig voneinander trans-1,4-Cyclohexylen, 1,4-Phenylen, 2-Fluor-1,4-phenylen, 3-Fluor-1,4-phenylen oder 2,3-Difluor-1,4-phenylen bedeuten.

9. Anzeige nach Anspruch 8, dadurch gekennzeichnet, daß die Flüssigkristallmischung mindestens eine Verbindung der nachfolgenden Formeln A bis G enthält:

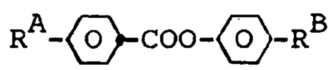 A

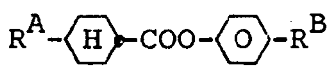 B

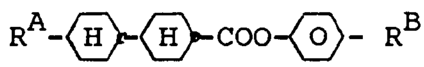 C

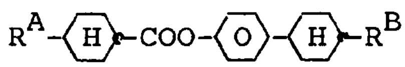 D

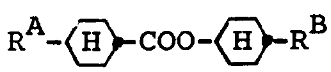 E

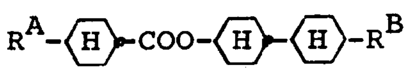 F

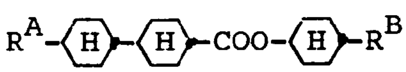 G

worin $R^A$ und $R^B$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann.

10. Anzeige nach mindestens einem der Ansprüche 8 und 9, dadurch gekennzeichnet, daß die Flüssigkristallmischung mindestens eine Verbindung der nachfolgenden Formeln H bis K enthält:

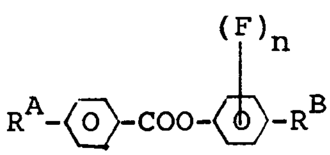 H

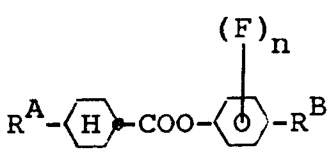 I

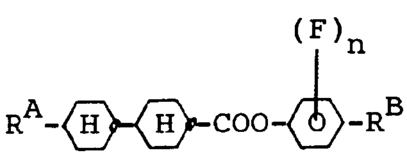 K

worin n 1 oder 2 ist, im Falle n = 2 die beiden Fluoratome benachbart sind und $R^A$ und $R^B$ die in Anspruch 9 angegebene Bedeutung haben.

**11.** Anzeige nach mindestens einem der Ansprüche 1 bis 10, dadurch gekennzeichnet, daß die Flüssigkristallmischung mindestens eine flüssigkristalline Tolan-Verbindung mit dem Strukturelement

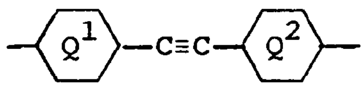

enthält, worin $Q^1$ und $Q^2$ unabhängig voneinander 1,4-Phenylen, 2-Fluor-1,4-phenylen, 3-Fluor-1,4-phenylen oder 2,3-Difluor-1,4-phenylen bedeuten.

**12.** Anzeige nach Anspruch 11, dadurch gekennzeichnet, daß die Flüssigkristallmischung mindestens eine Verbindung der nachfolgenden Formeln L bis Q enthält:

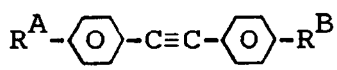

L

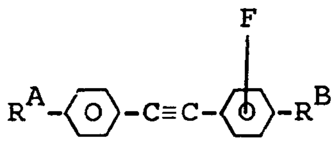

M

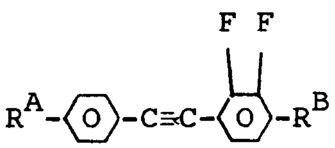

N

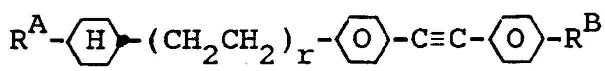

O

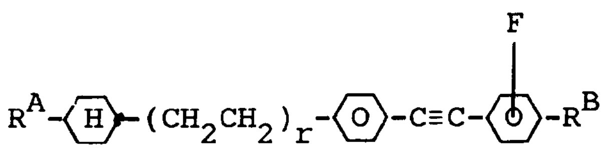

P

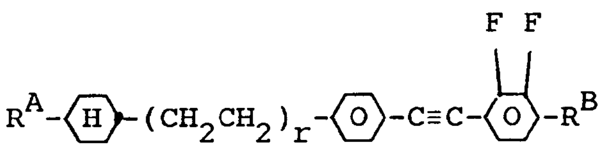

Q

worin $R^A$ und $R^B$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe dürch -O-, -CO-, -CO-O- oder -O-CO- ersetzt sein kann.

**13.** Anzeige nach mindestens einem der Asprüche 11 und 12, dadurch gekennzeichnet, daß die Flüssigkristallmischung mindestens eine Verbindung der nachfolgenden Formeln R und/oder S enthält:

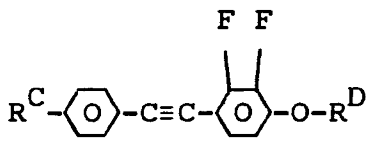

R

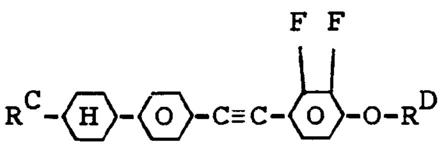

S

worin $R^C$ und $R^D$ jeweils unabhängig voneinander n-Alkyl mit 1 bis 10 C-Atomen oder (trans)-n-Alkenyl mit 3 bis 10 C-Atomen bedeutet.

**14.** Anzeige nach Anspruch 1, dadurch gekennzeichnet, daß sie eine Ethin-Verbindung der Formel II enthält,

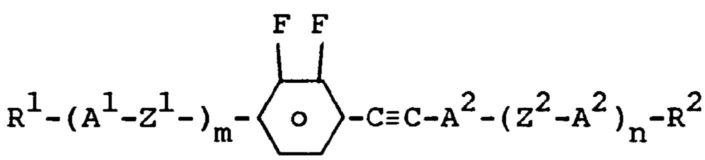

II

worin

$R^1$ und $R^2$ jeweils unabhängig voneinander Alkyl mit 1 bis 15 C-Atomen oder Alkenyl mit 3 bis 15 C-Atomen, wobei in diesen Resten jeweils auch eine $CH_2$-Gruppe durch -O-, -CO-, -CO-O- oder -O-CO- ersetzt sein kann, einer der Reste $R^1$ und $R^2$ auch F, Cl, CN, NCS, $CF_3$ oder $OCF_3$,

$A^1$ und $A^2$ jeweils unabhängig voneinander

a) trans-1,4-Cyclohexylen, worin auch eine oder zwei nicht benachbarte $CH_2$-Gruppen durch -O- und/oder -S- ersetzt sein können,

b) 1,4-Phenylen, worin auch eine oder zwei CH-Gruppen durch N ersetzt sein können,

c) Rest aus der Gruppe bestehend aus 1,4-Bicyclo-(2,2,2)octylen und 1,4-Cyclohexenylen,

wobei die Reste b) durch Fluor ein- oder mehrfach substituiert sein können,

$Z^1$ und $Z^2$ jeweils unabhängig voneinander -CO-O-, -O-CO-, $-CH_2O-$, $-OCH_2-$, $-CH_2CH_2-$ oder eine Einfachbindung und

m und n jeweils unabhängig voneinander 0 oder 1 bedeuten.

**15.** Anzeige nach mindestens einem der Ansprüche 1 bis 14, dadurch gekennzeichnet, daß die Flüssigkristallmischung mindestens eine flüssigkristalline Verbindung mit dem Strukturelement

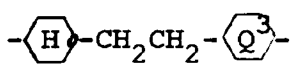

enthält, worin $Q^3$ trans-1,4-Cyclohexylen, 1,4-Phenylen, 2-Fluor-1,4-phenylen, 3-Fluor-1,4-phenylen oder 2,3-Difluor-1,4-phenylen bedeutet.

**16.** Anzeige nach Anspruch 15, dadurch gekennzeichnet, daß die Flüssigkristallmischung mindestens eine Verbindung der nachfolgenden Formeln E1 bis E7 enthält:

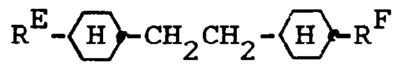

E1

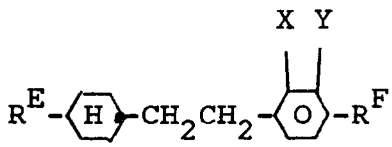

E2

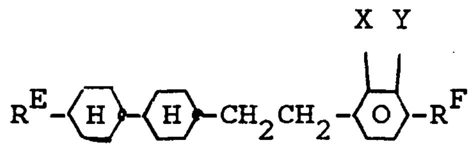

E3

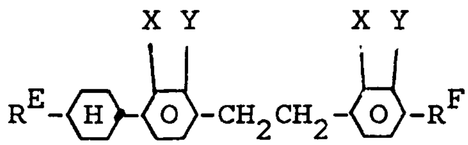

E4

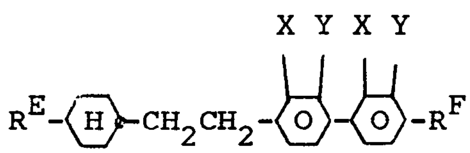

E5

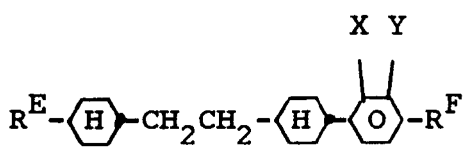

E6

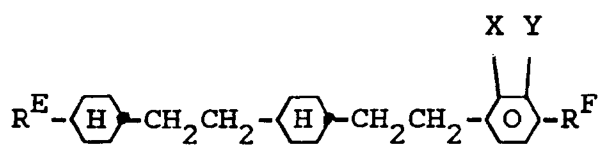

E7

worin $R^E$ jeweils n-Alkyl mit 1 bis 10 C-Atomen oder (trans)-n-Alkenyl mit 3 bis 10 C-Atomen, $R^F$ n-Alkyl mit 1 bis 10 C-Atomen, n-Alkoxy mit 1 bis 10 C-Atomen, (trans)-n-Alkenyl mit 3 bis 10 C-Atomen, F oder CN, und X und Y jeweils unabhängig H oder F bedeuten.

**17.** Anzeige nach Anspruch 16, dadurch gekennzeichnet, daß die Flüssigkristallmischung mindestens eine Verbindung der Formeln E3 bis E7 enthält.

**18.** Anzeige nach Anspruch 17, dadurch gekennzeichnet, daß in mindestens einer Verbindung der Formeln E3 bis E7 $R^F$ n-Alkyl oder n-Alkenyl und X und Y jeweils H bedeuten.

**19.** Anzeige nach Anspruch 17 oder 18, dadurch gekennzeichnet, daß in mindestens einer Verbindung der Formeln E3 bis E7 $R^F$ Fluor, X H und Y H oder Fluor bedeutet.

**20.** Anzeige nach mindestens einem der Ansprüche 17 bis 19, dadurch gekennzeichnet, daß in mindestens einer Verbindung der Formeln E3 bis E7 $R^F$ Cyan bedeutet.

**21.** Flüssigkristallmischung der in einem der Ansprüche 1 bis 20 definierten Zusammensetzung.

**22.** Verwendung einer nematischen Flüssigkristallmischung, die mindestens eine 1,4-disubstituierte 2,3-Difluorbenzolverbindung enthält und folgenden Bedingungen genügt:

- nematischer Phasenbereich von mindestens 60 °C,
- Viskosität von 30 mPa.s oder darunter, und
- $\Delta\varepsilon/\varepsilon_\perp < 2.0$, wobei $\varepsilon_\perp$ die dielektrische Anisotropie und $\varepsilon_\perp$ die Dielektrizitätskonstante in Richtung der kurzen Achse der Flüssigkristallmoleküle bedeutet,

als Dielektrikum einer Supertwist-Flüssigkristallanzeige mit hoher Kennliniensteilheit und mit

- zwei planparallelen Trägerplatten, die mit einer Umrandung eine Zelle bilden,
- einer in der Zelle befindlichen nematischen Flüssigkristallmischung mit positiver dielektrischer Anisotropie und mit mindestens einem chiralen Dotierstoff,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1° bis 30°, und
- einem Verdrillungswinkel der Flüssigkristallmischung in der Zelle von Orientierungsschicht zu Orientierungsschicht dem Betrag nach zwischen 160° und 450°.

## Claims

1. Supertwist liquid crystal display with
   - two plane-parallel carrier plates which, with a bordering, form a cell,
   - a nematic liquid crystal mixture, located in the cell, having a positive dielectric anisotropy and at least one chiral doping material,
   - electrode layers with superposed orientation layers on the insides of the carrier plates,
   - a tilt angle of about 1° to 30° between the longitudinal axis of the molecules at the surface of the carrier plates and the carrier plates, and
   - a twist angle of the liquid crystal mixture in the cell from orientation layer to orientation layer of an amount between. 160° and 450°,

   characterised in that the nematic liquid crystal mixture contains at least one 1,4-disubstituted 2,3-difluorobenzene compound, and satisfies the following conditions:
   - a nematic phase range of at least 60°C,
   - a viscosity of 30 mPa.s or lower, and
   - $\Delta\varepsilon/\varepsilon_\perp < 2.0$, where $\Delta\varepsilon$ is the dielectric anisotropy and $\varepsilon_\perp$ is the dielectric constant in the direction of the short axis of the liquid crystal molecule.

2. Display according to Claim 1, characterised in that the product of the birefringence $\Delta n$ and the layer thickness of the liquid crystal mixture is between 0.1 µm and 2.5 µm.

3. Display according to at least one of Claims 1 and 2, characterised in that the dielectric constant $\varepsilon_\perp$ is greater than or equal to 4.

4. Display according to at least one of Claims 1 to 3, characterised in that the dielectric anisotropy $\Delta\varepsilon$ is greater than or equal to 5.

5. Display according to at least one of Claims 1 to 4, characterised in that the dielectric constant $\varepsilon_\perp$ is greater than or equal to 5.

6. Display according to claim 1, characterised in that the 2,3-difluorobenzene compound contains a 4-substituted 2,3-difluorophenoxy group.

7. Display according to Claim 1, characterised in that the 2,3-difluorobenzene compound is a compound of the formula I

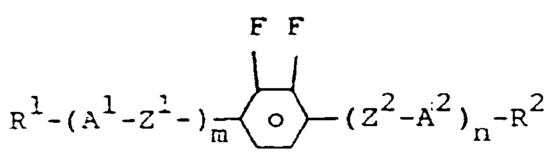

I

wherein

$R^1$ and $R^2$ each independently of one another are alkyl having 1 to 15 C atoms or alkenyl having 3 to 15 C atoms, it also being possible for one $CH_2$ group in each of these radicals to be replaced by -O-, -CO-, -CO-O- or -O-CO-, and one of the radicals $R^1$ and $R^2$ can also be F, Cl, CN, NCS, $CF_3$ or $OCF_3$,

$A^1$ and $A^2$ each independently of one another are

a) trans-1,4-cyclohexylene, in which one or two non-adjacent $CH_2$ groups can also be replaced by -O- and/or -S-,

b) 1,4-phenylene, in which one or two CH groups can also be replaced by N, or

c) a radical from the group comprising 1,4-bicyclo(2,2,2)octylene and 1,4-cyclohexenylene,

it being possible for the radicals b) to be mono- or poly-substituted by fluorine,

$Z^1$ and $Z^2$ each independently of one another are -CO-O-, -O-CO-, $-CH_2O-$, $-OCH_2-$, $-CH_2CH_2-$ or a single bond,

m and n each independently of one another are 0, 1 or 2, and

(m + n) is 1, 2 or 3.

**8.** Display according to at least one of Claims 1 to 7, characterised in that the liquid crystal mixture contains at least one liquid-crystalline compound with the structural element

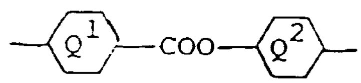

wherein $Q^1$ and $Q^2$ independently of one another are trans-1,4-cyclohexylene,1,4-phenylene,2-fluoro-1,4-phenylene, 3-fluoro-1,4-phenylene or 2,3-difluoro-1,4-phenylene.

**9.** Display according to Claim 8, characterised in that the liquid crystal mixture contains at least one compound of the following formulae A to G:

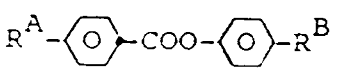 A

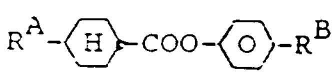 B

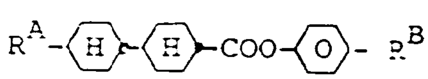 C

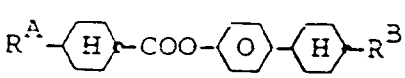 D

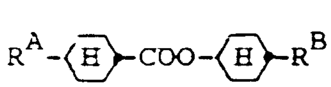 E

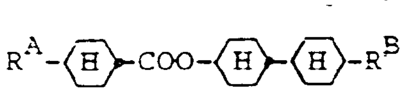 F

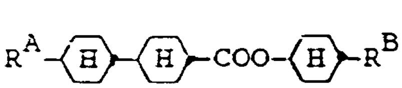 G

wherein $R^A$ and $R^B$ each independently of one another are alkyl having 1 to 15 C atoms or alkenyl having 3 to 15 C atoms, it also being possible for one $CH_2$ group in each of these radicals to be replaced by -O-, -CO-, -CO-O- or -O-CO-.

**10.** Display according to at least one of Claims 8 and 9, characterised in that the liquid crystal mixture contains at least one compound of the following formulae H to K:

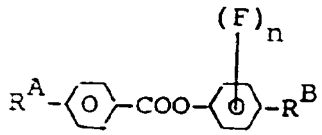

H

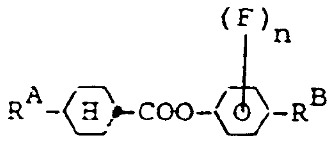

I

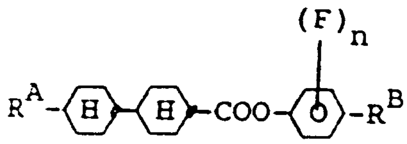

K

wherein n is 1 or 2 and, in the case of n = 2, the two fluorine atoms are adjacent, and $R^A$ and $R^B$ have the meaning given in Claim 9.

**11.** Display according to at least one of Claims 1 to 10, characterised in that the liquid crystal mixture contains at least one liquid-crystalline tolan compound with the structural element

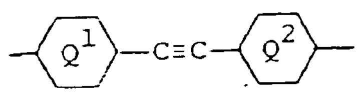

wherein $Q^1$ and $Q^2$ independently of one another are 1,4-phenylene,2-fluoro-1,4-phenylene,3-fluoro-1,4-phenylene or 2,3-difluoro-1,4-phenylene.

**12.** Display according to Claim 11, characterised in that the liquid crystal mixture contains at least one compound of the following formulae L to Q:

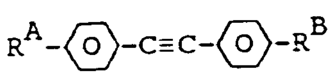

L

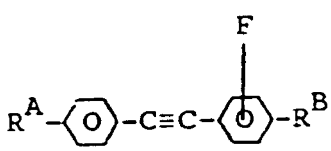

M

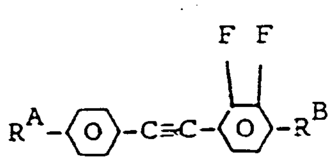

N

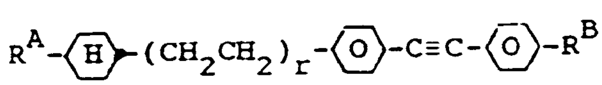

O

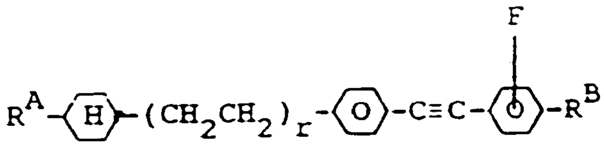

P

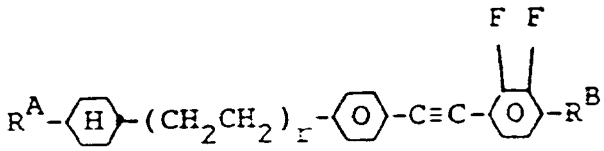

Q

wherein $R^A$ and $R^B$ each independently of one another are alkyl having 1 to 15 C atoms or alkenyl having 3 to 15 C atoms, it also being possible for one $CH_2$ group in each of these radicals to be replaced by -O-, -CO-, -CO-O- or -O-CO-.

**13.** Display according to at least one of Claims 11 and 12, characterised in that the liquid crystal mixture contains at least one compound of the following formulae R and/or S:

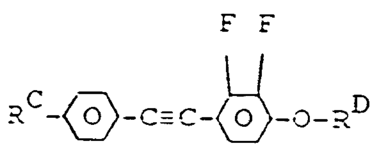

R

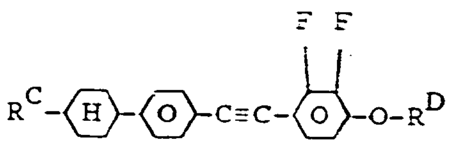

S

wherein $R^C$ and $R^D$ each independently of one another are n-alkyl having 1 to 10 C atoms or (trans)-n-alkenyl having 3 to 10 C atoms.

**14.** Display according to Claim 1, characterised in that it contains an ethyne compound of the formula II

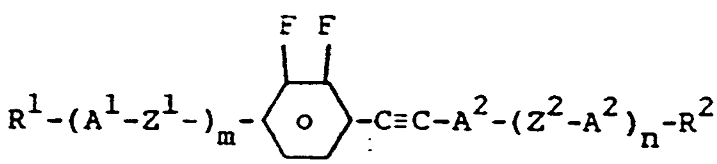

II

wherein

$R^1$ and $R^2$ each independently of one another are alkyl having 1 to 15 C atoms or alkenyl having 3 to 15 C atoms, it also being possible for one $CH_2$ group in each of these radicals to be replaced by -O-, -CO-, -CO-O- or -O-CO-, and one of the radicals $R^1$ and $R^2$ can also be F, Cl, CN, NCS, $CF_3$ or $OCF_3$,

$A^1$ and $A^2$ each independently of one another are

a) trans-1,4-cyclohexylene, in which one or two non-adjacent $CH_2$ groups can also be replaced by -O- and/or -S-,

b) 1,4-phenylene, in which one or two CH groups can also be replaced by N, or

c) a radical from the group comprising 1, 4-bicyclo(2,2,2)octylene and 1,4-cyclohexenylene,

it being possible for the radicals b) to be mono- or poly-substituted by fluorine,

$Z^1$ and $Z^2$ each independently of one another are -CO-O-, -O-CO-, $-CH_2O-$, $-OCH_2-$, $-CH_2CH_2-$ or a single bond,

m and n each independently of one another are 0 or 1.

**15.** Display according to at least one of Claims 1 to 14, characterised in that the liquid crystal mixture contains at least one liquid-crystalline compound with the structural element

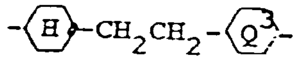

wherein $Q^3$ is trans-1,4-cyclohexylene, 1,4-phenylene, 2-fluoro-1,4-phenylene, 3-fluoro-1,4-phenylene or 2,3-difluoro--1,4-phenylene.

**16.** Display according to Claim 15, characterised in that the liquid crystal mixture contains at least one compound of the following formulae E1 to E7

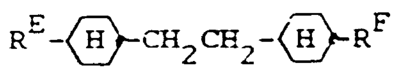

E1

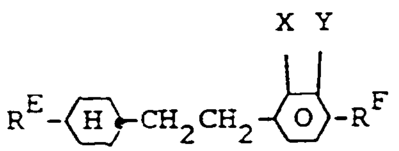

E2

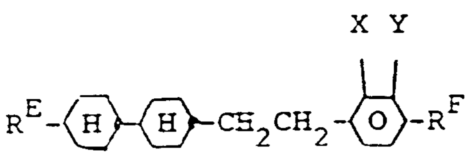

E3

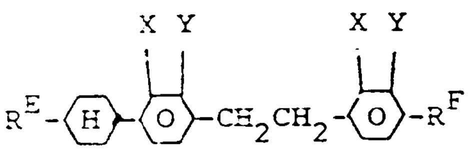

E4

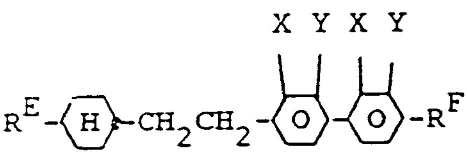

E5

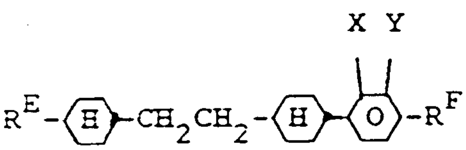

E6

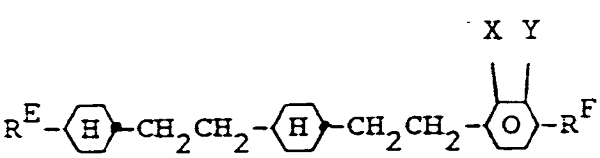

E7

wherein in each case $R^E$ is n-alkyl having 1 to 10 C atoms or (trans)-n-alkenyl having 3 to 10 C atoms, $R^F$ is n-alkyl having 1 to 10 C atoms, n-alkoxy having 1 to 10 C atoms, (trans)-n-alkenyl having 3 to 10 C atoms, F or CN, and X and Y each independently of one another are H or F.

**17.** Display according to Claim 16, characterised in that the liquid crystal mixture contains at least one compound of the formulae E3 to E7.

**18.** Display according to Claim 17, characterised in that, in at least one compound of the formulae E3 to E7, $F^F$ is n-alkyl or n-alkenyl and X and Y are each H.

**19.** Display according to Claim 17 or 18, characterised in that, in at least one compound of the formulae E3 to E7, $R^F$ is fluorine, X is H and Y is H or fluorine.

**20.** Display according to at least one of Claims 17 to 19, characterised in that, in at least one compound of the formulae E3 to E7, $R^R$ is cyano.

**21.** Liquid crystal mixture of the composition defined in one of Claims 1 to 20.

**22.** Use of a nematic liquid crystal mixture which contains at least one 1,4 -disubstituted 2,3-difluorobenzene compound and satisfies the following conditions:
– a nematic phase range of at least 60°C,
– a viscosity of 30 mPa.s or lower, and
– $\Delta\varepsilon/\varepsilon|$ < 2.0, where $\Delta\varepsilon$ is the dielectric anisotropy and $\varepsilon|$ is the dielectric constant in the direction of the short axis of the liquid crystal molecules
as the dielectric in a supertwist liquid crystal display with high steepness of the characteristic and with
– two plane-parallel carrier plates which, with a bordering, form a cell,
– a nematic liquid crystal mixture, located in the cell, having a positive dielectric anisotropy and at least one chiral doping material,
– electrode layers with superposed orientation layers on the insides of the carrier plates,
– a tilt angle of about 1° to 30° between the longitudinal axis of the molecules at the surface of the carrier plates and the carrier plates, and
– a twist angle of the liquid crystal mixture in the cell from orientation layer to orientation layer of an amount between 160° and 450°.

## Revendications

**1.** Affichage à cristaux liquides à surtorsion avec :
– deux plaques supports à plan parallèle, qui forment avec une bordure une cellule,
– un mélange de cristaux liquides nématiques se trouvant dans la cellule avec anisotropie diélectrique positive et avec au moins un agent de dopage chiral,
– des couches d'électrodes sur lesquelles se trouvent des couches d'orientation aux côtés internes des plaques supports,
– un angle de réglage entre l'axe longitudinal des molécules à la surface des plaques supports et les plaques supports compris entre environ 1° et 30°, et
– un angle de torsion du mélange de cristaux liquides dans la cellule de couche d'orientation en couche d'orientation compris entre 160° et 450°, caractérisé en ce que le mélange de cristaux liquides nématiques contient au moins un composé de 2,3-difluorobenzène 1,4-substitué et satisfait aux conditions suivantes :
– intervalle de phases nématique d'au moins 60°C,
– viscosité de 30 MPa.s ou moins, et,
– $\Delta\varepsilon/\varepsilon_{|}$ < 2,0, où $\Delta\varepsilon$ représente l'anisotropie diélectrique et $\varepsilon_{\perp}$ la constante diélectrique dans la direction de l'axe court de la molécule de cristaux liquides.

**2.** Affichage selon la revendication 1, caractérisé en ce que le produit de la double réfraction $\Delta n$ et de l'épaisseur de couche du mélange de cristaux liquides se situe entre 0,1 $\mu$m et 2,5 $\mu$m.

**3.** Affichage selon au moins une des revendications 1 et 2, caractérisé en ce que la constante diélectrique $\varepsilon_{\perp}$ est supérieure ou égale à 4.

**4.** Affichage selon au moins une des revendications 1 à 3, caractérisé en ce que l'anisotropie diélectrique $\Delta\varepsilon$ est supérieure ou égale à 5.

5. Affichage selon au moins une des revendications 1 à 4, caractérisé en ce que la constante diélectrique $\varepsilon_\perp$ est supérieure ou égale à 5.

6. Affichage selon la revendication 1, caractérisé en ce que le composé de 2,3-difluorobenzène contient un groupe 2,3-difluorophénoxy substitué en 4.

7. Affichage selon la revendication 1, caractérisé en ce que le composé de 2,3-difluorobenzène est un composé de formule I,

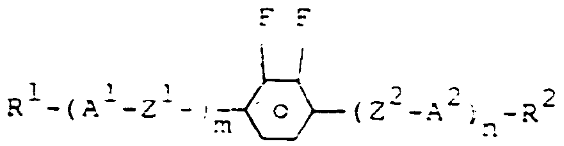

I

dans laquelle

$R^1$ et $R^2$ représentent chacun indépendamment l'un de l'autre un alcoyle en $C_{1-15}$ ou un alcényle en $C_{3-15}$, où dans ces radicaux à chaque fois un groupe $CH_2$ peut également être remplacé par -O-, -CO-, -CO-O-, ou -O-CO-, un des radicaux $R^1$ et $R^2$ représente également F, Cl, CN, NCS, $CF_3$ ou $OCF_3$.

$A^1$ et $A^2$ représentent indépendamment l'un de l'autre

a) un trans-1,4-cyclohexylène, où également un ou deux groupes $CH_2$ non voisins peuvent être remplacés par -O- et/ou -S-,

b) un 1,4-phénylène, où encore un ou deux groupes CH peuvent être remplacés par N,

c) un radical du groupe constitué par le 1,4-bicyclo(2,2,2)octylène et le 1,4-cyclohexénylène,

où les radicaux b) peuvent être mono- ou substitués par du fluor,

$Z^1$ et $Z^2$ représentent chacun indépendamment l'un de l'autre -CO-O-, -O-CO-, $-CH_2-O-$, $-O-CH_2-$, $CH_2CH_2-$ ou une liaison simple,

m et n représentent chacun indépendamment l'un de l'autre 0, 1 ou 2, et

(m + n) vaut 1, 2 ou 3.

8. Affichage selon au moins une des revendications 1 à 7, caractérisé en ce que le mélange de cristaux liquides contient au moins un composé à cristaux liquides d'élément structural

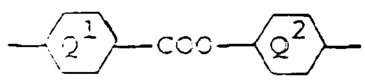

où $Q^1$ et $Q^2$ représentent indépendamment l'un de l'autre un trans-1,4-cyclohexylène, 1,4-phénylène, 2-fluoro-1,4-phénylène, 3-fluoro-1,4-phénylène ou 2,3-difluoro-1,4-phénylène.

9. Affichage selon la revendication 8, caractérisé en ce que le mélange de cristaux liquides contient au moins un composé des formules A à G ci-dessous :

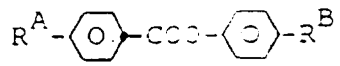

A

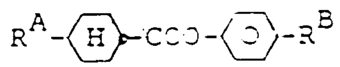

B

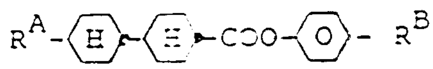

C

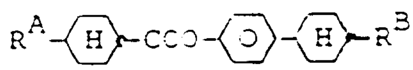

D

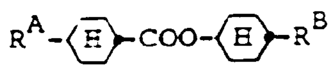

E

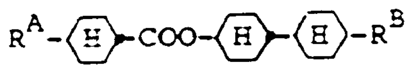

F

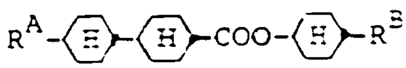

G

où $R^A$ et $R^B$ représentent chacun indépendamment l'un de l'autre un alcoyle en $C_{1-15}$ ou un alcényle en $C_{3-15}$, où dans ces radicaux à chaque fois un groupe $CH_2$ peut être remplacé par -O-, -CO-, -CO-O-, ou -O-CO-.

**10.** Affichage selon au moins une des revendications 8 et 9, caractérisé en ce que le mélange de cristaux liquides contient au moins un composé des formules H à K ci-dessous :

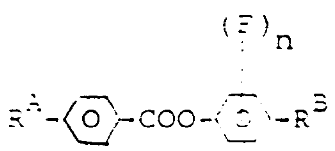

H

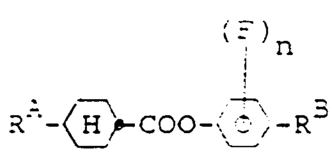

I

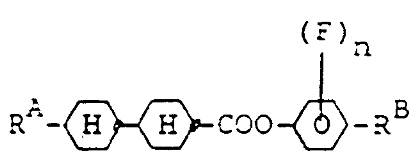

K

où n vaut 1 ou 2, dans le cas où n = 2 les deux atomes de fluor sont voisins et $R^A$ et $R^B$ ont la signification donnée dans la revendication 9.

**11.** Affichage selon au moins l'une des revendications 1 à 10, caractérisé en ce que le mélange de cristaux liquides contient au moins un composé de tolane à cristaux liquides avec l'élément structural

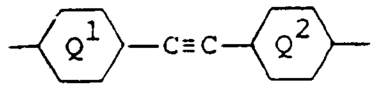

où $Q^1$ et $Q^2$ représentent indépendamment l'un de l'autre un 1,4-phénylène, 2-fluoro-1,4-phénylène, 3-fluoro-1,4-phénylène ou 2,3-difluoro-1,4-phénylène.

**12.** Affichage selon la revendication 11, caractérisé en ce que le mélange de cristaux liquides contient au moins un composé de formules L à Q ci-dessous :

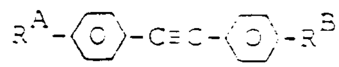 L

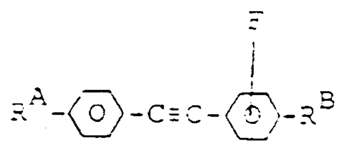 M

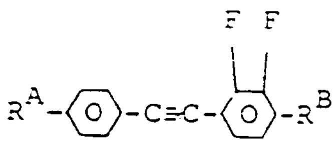 N

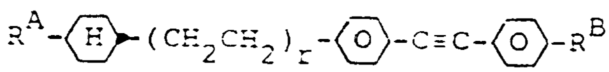 O

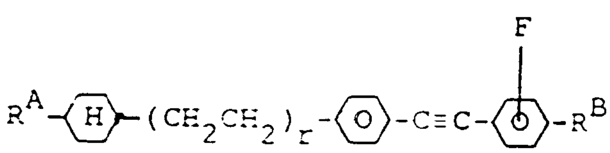 P

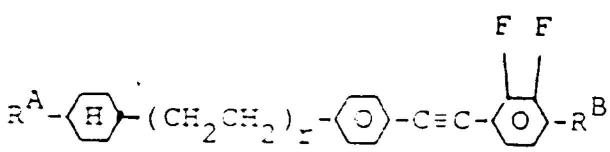 Q

où $R^A$ et $R^B$ représentent chacun indépendamment l'un de l'autre un alcoyle en $C_{1-15}$ ou un alcényle en $C_{3-15}$ où dans ces radicaux à chaque fois un groupe $CH_2$ peut être remplacé par -O-, -CO-, -CO-O- ou -O-CO-.

**13.** Affichage selon au moins l'une des revendications 11 et 12, caractérisé en ce que le mélange de cristaux liquides contient au moins un composé de formule R et/ou S ci-dessous :

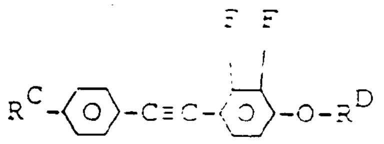

R

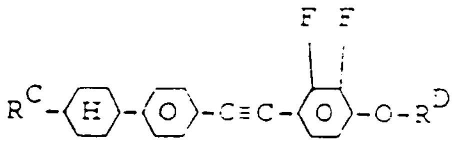

S

où $R^C$ et $R^D$ représentent chacun indépendamment l'un de l'autre un n-alcoyle en $C_{1-10}$ ou un (trans)-n-alcényle en $C_{3-10}$.

**14.** Affichage selon la revendication 1, caractérisé en ce qu'il contient un composé d'éthyne (acétylène) de formule II

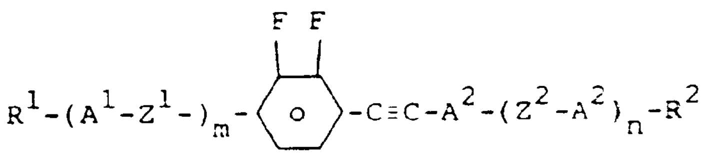

II

dans laquelle

$R^1$ et $R^2$ représentent chacun indépendamment l'un de l'autre un alcoyle en $C_{1-15}$ ou un alcényle en $C_{3-15}$, où dans ces radicaux également à chaque fois un groupe $CH_2$ peut être remplacé par -O-, -CO-, -Co-O-, ou -O-CO-, l'un des radicaux $R^1$ et $R^2$ représente également F, Cl, CN, NCS, $CF_3$ ou $OCF_3$.

$A^1$ et $A^2$ représentent chacun indépendamment l'un de l'autre

a) un trans-1,4-cyclohexylène, où un ou deux groupes $CH_2$ non-voisins peuvent remplacés par -O- et/ou -S-,

b) un 1,4-phénylène, où également un ou deux groupes CH peuvent être remplacés par N,

c) un radical du groupe constitué par le 1,4-bicyclo(2,2,2)octylène et le 1,4-cyclohexénylène,

où les radicaux b) peuvent être mono- ou polysubstitués par un fluor,

$Z^1$ et $Z^2$ représentent chacun indépendamment l'un de l'autre -CO-O-, -O-CO-, $-CH_2-O-$, $-OCH_2-$, $-CH_2CH_2-$ ou une liaison simple et

m et n représentent chacun indépendamment l'un de l'autre 0 ou 1.

**15.** Affichage selon au moins l'une des revendications 1 à 14, caractérisé en ce que le mélange de cristaux liquides contient au moins un composé à cristaux liquides avec l'élement structural

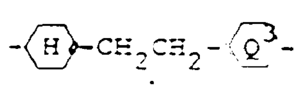

où $Q^3$ représente un trans-1,4-cyclohexylène, 1,4-phénylène, 2-fluoro-1,4-phénylène, 3-fluoro-1,4-phénylène ou 2,3-difluoro-1,4-phénylène.

**16.** Affichage selon la revendication 15, caractérisé en ce que le mélange de cristaux liquides contient au moins un composé de formules E1 à E7 ci-dessous :

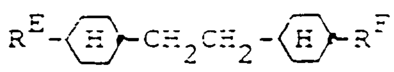

E1

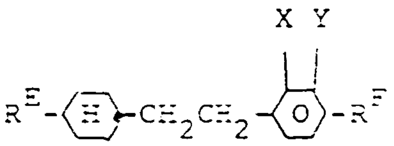

E2

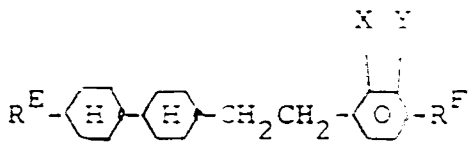

E3

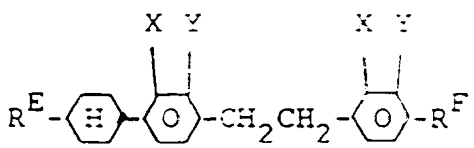

E4

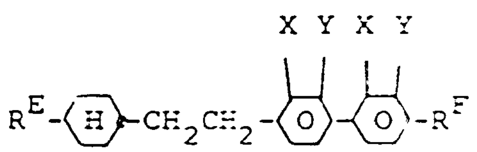

E5

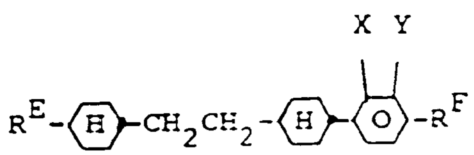

E6

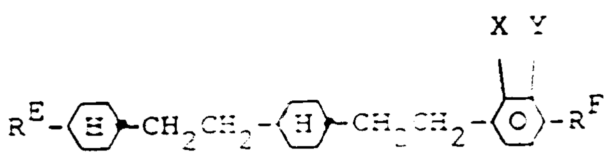

E7

où $R^E$ représente à chaque fois un n-acoyle en $C_{1-10}$ ou un (trans)-n-alcényle en $C_{3-10}$, $R^F$ représente un n-alcoyle en $C_{1-10}$, un n-alcoxy en $C_{1-10}$, un (trans)-n-alcényle en $C_{3-10}$, F ou CN, et X et Y représentent chacun indépendamment H ou F.

**17.** Affichage selon la revendication 16, caractérisé en ce que le mélange de cristaux liquides contient au moins un composé de formules E3 à E7.

**18.** Affichage selon la revendication 17, caractérisé en ce que dans au moins un composé de formules E3 à E7 $R^F$ représente un n-alcoyle ou un n-alcényle et X et Y représentent à chaque fois H.

**19.** Affichage selon la revendication 17 ou 18, caractérisé en ce que dans au moins un composé de formules E3 à E7 $R^F$ représente un fluor, X représente H et Y représente H ou un fluor.

**20.** Affichage selon au moins l'une des revendications 17 à 19, caractérisé en ce que dans au moins un composé de formules E3 à E7, $R^F$ représente un cyano.

**21.** Mélange de cristaux liquides de composition définie dans l'une des revendications 1 à 20.

**22.** Application d'un mélange de cristaux liquides nématiques qui contient au moins un composé de 2,3-difluorobenzène substitué en 1,4 et qui répond aux conditions suivantes :

– intervalle de phases nématiques d'au moins 60°C,

– viscosité de 30 MPa.s ou en dessous, et

– $\Delta\varepsilon/\varepsilon_{\perp} < 2.0$,

ou $\Delta\varepsilon$ représente l'anisotropie électrique et $\varepsilon_{\perp}$ la constante diélectrique dans la direction de l'axe court de la molécule de cristal liquide,

comme diélectrique d'un affichage à cristaux liquides à surtorsion à grande pente de ligne caractéristique et avec :

– deux plaques supports à plan parallèle qui une bordure forment une cellule,

– un mélange de cristaux liquides se trouvant dans la cellule, à anisotropie isoélectrique positive et avec au moins un agent de pente chiral,

– des couches d'électrodes sur lesquelles se trouvent des couches d'orientation sur les côtés internes des plaques supports,

– un angle de réglage entre l'axe long de la molécule à la surface des plaques supports et des plaques supports d'environ 1° à 30°, et

– un angle de torsion du mélange de cristaux liquides dans la cellule de couche d'orientation à couche d'orientation s'élevant entre 160° et 450°.